# FASCICULE DE BREVET EUROPEEN

(11) **EP 4 350 288 B1**
(45) Date de publication et mention de la délivrance du brevet: **16.07.2025**
(21) Numéro de dépôt: 23201347.4
(22) Date de dépôt: 03.10.2023
(51) Int. Cl.: G01C 19/5733, G01C 19/5747, G01C 19/5762

(54) **DISPOSITIF MICRO-ÉLECTROMÉCANIQUE**
MIKROELEKTROMECHANISCHE VORRICHTUNG
MICROELECTROMECHANICAL DEVICE

(30) Priorité: 05.10.2022 FR 2210219
(43) Date de publication de la demande: 10.04.2024
(73) Titulaire: Commissariat à l'Energie Atomique et aux Energies Alternatives, 75015 Paris (FR)
(72) Inventeur: JOET, Loïc, 38054 GRENOBLE CEDEX 09 (FR); REY, Patrice, 38054 GRENOBLE CEDEX 09 (FR)
(74) Mandataire: Cabinet Camus Lebkiri

(56) Documents cités:
- EP-A1- 3 407 016
- DE-A1- 102009 046 506
- US-A1- 2011 308 314
- US-B2- 8 261 614

## Description

### DOMAINE TECHNIQUE

Le domaine technique de l'invention est celui des dispositifs micro-électromécaniques ou MEMS (pour « MicroElectroMechanical Systems», en anglais). L'invention concerne en particulier un tel dispositif employé comme capteur inertiel, et comprenant une masse d'épreuve pouvant pivoter par rapport à un cadre ou un support sous l'effet des efforts qu'elle subit.

### ARRIERE-PLAN TECHNOLOGIQUE

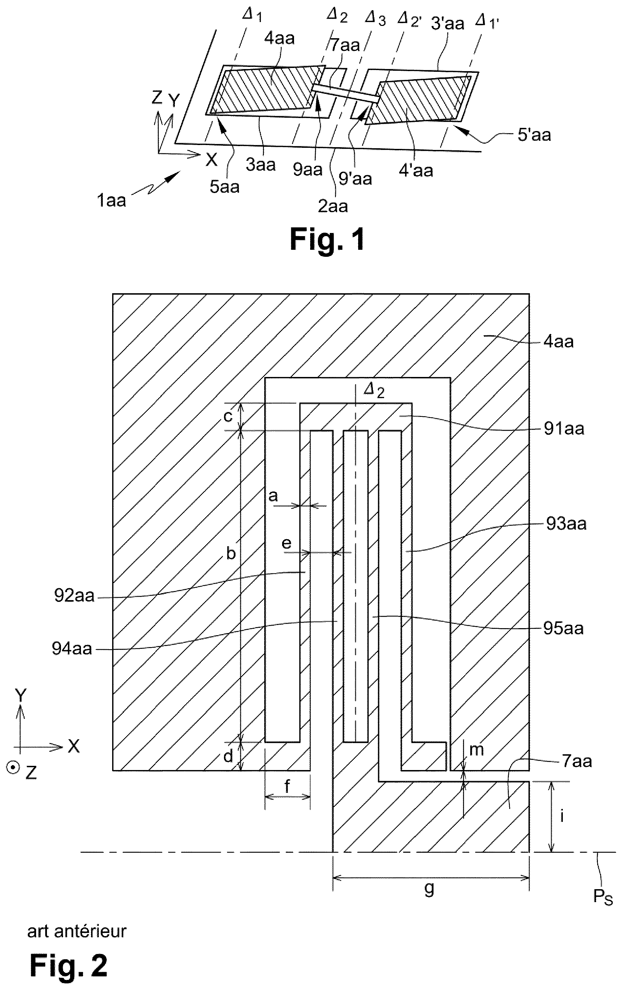

Différents types de gyromètres micro-électromécaniques ont été développés ces dernières années, en particulier des gyromètres à mouvement « hors plan », tels que celui représenté schématiquement sur la figure 1, qui permettent de mesurer une vitesse de rotation autour d'un axe Y parallèle au plan moyen du substrat à partir duquel est réalisé le gyromètre, 1aa.

La majeure partie de ce substrat forme une couche, épaisse, qui sert de support 2aa. Le gyromètre 1aa comprend deux cadres mobiles 3aa et 3aa', parallèles au support, et guidés chacun en déplacement par rapport à ce support 2aa, selon un axe X qui est parallèle au support 2aa (parallèle au substrat), et perpendiculaire à l'axe de mesure de vitesse angulaire de rotation, Y. Lors du fonctionnement du gyromètre, les deux cadres sont mis en mouvement, par exemple par actionnement électrostatique au moyen de peignes interdigités (non représentés), de manière à osciller parallèlement à l'axe X, en opposition de phase l'un par rapport à l'autre (de manière symétrique). Les deux cadres ont alors des vitesses de déplacement, par rapport au support 2aa, qui sont opposées l'une à l'autre.

Chaque cadre 3aa, 3aa' entraine avec lui une masse d'épreuve 4aa, 4aa' (appelée aussi masse Coriolis), qui est reliée au cadre par une première liaison 5aa, 5aa' autorisant un pivotement de la masse d'épreuve autour d'un axe de rotation Δ₁, Δ₁' (axe de la liaison) parallèle à l'axe Y. Cette liaison s'apparente ainsi, en partie à une liaison pivot, ou, autrement dit, à une charnière.

Chaque masse d'épreuve 4aa, 4aa' est reliée par ailleurs à un levier de détection de pivotement commun aux deux masses, 7aa, par l'intermédiaire d'une deuxième liaison mécanique 9aa, 9aa'. Ce levier 7aa pivote autour d'un axe de détection Δ₃, qui est parallèle à l'axe Y et qui est fixe par rapport au support 2aa. Le levier 7aa est situé dans la zone centrale du gyromètre, entre les deux masses d'épreuve.

Lorsque le gyromètre 1aa tourne (i.e. : lorsque le support 2aa tourne) par rapport à un référentiel inertiel (galiléen), autour de l'axe Y, avec une vitesse angulaire Ω̅ = Ωy̅, chaque masse 4aa, 4aa' subit alors une force de Coriolis, qui s'exprime comme F̅*_{cor}* = 2 *m_{cor}* (*vx̅*) ∧ (Ωy̅) où m_{cor} représente la masse de l'une quelconque de ces deux masses d'épreuve 4aa, 4aa' et où v est sa vitesse de déplacement (selon l'axe X). Cette force (« hors plan ») est donc dirigée selon un axe Z perpendiculaire au support 2aa, et elle est de même amplitude mais de sens opposé pour les deux masses d'épreuve 4aa et 4aa' (puisque les deux masses sont entrainées en sens opposés). Pour chaque masse, cette force entraine donc un déplacement hors-plan de la masse (plus précisément un déplacement d'une extrémité mobile de la masse, dans une direction parallèle à l'axe Z). Cette force entraine ainsi un pivotement de la masse autour de son axe de rotation (axe de la liaison masse-cadre). Ce déplacement hors plan a lieu dans un sens opposé pour les deux masses. Le déplacement hors plan de ces deux masses fait alors tourner le levier de détection 7aa autour de l'axe de détection Δ₃. Cette rotation du levier est alors mesurée, par exemple grâce à des jauges de contraintes (piézo-résistives, piézo-électriques, ou à détection résonante) pour en déduire la vitesse angulaire Ω.

Dans un gyromètre tel que celui-ci, il est connu de réaliser les deuxièmes liaisons 9aa, 9aa' comme cela est représenté sur la figure 2. Ces deux liaisons 9aa et 9aa' sont généralement identiques. La liaison 9aa comprend deux demi-liaisons, situées respectivement d'un côté et de l'autre du levier, de part et d'autre d'un plan de symétrie Ps de l'ensemble masse-levier (plan de symétrie qui est perpendiculaire à l'axe Y). Les deux demi-liaisons en question sont situées en face l'une de l'autre. Elles sont symétriques l'une de l'autre par rapport à ce plan de symétrie. La figure 2 montre l'une de ces deux demi-liaisons.

Cette demi-liaison comprend quatre « poutres » 92aa, 93aa, 94aa, 95aa formant chacune une paroi mince qui s'étend parallèlement aux axes Y et Z (et donc perpendiculairement au plan moyen du gyromètre). Deux de ces poutres, 93aa et 94aa, situées l'une à côté de l'autre (elles occupent des positions légèrement différentes, le long de l'axe X), se raccordent rigidement, chacune, d'un côté au levier 7aa, et de l'autre à un élément de raccord 91aa. Les deux autres poutres 92aa et 93aa se raccordent rigidement, chacune, d'un côté à la masse 4aa, et de l'autre à l'élément de raccord 91aa. Le couple de poutres 94aa, 95aa est situé entre la poutre 92aa et la poutre 93aa. L'élément de raccord 91aa se raccorde seulement aux quatre poutres en question, et forme ainsi une sorte d'ilot mobile.

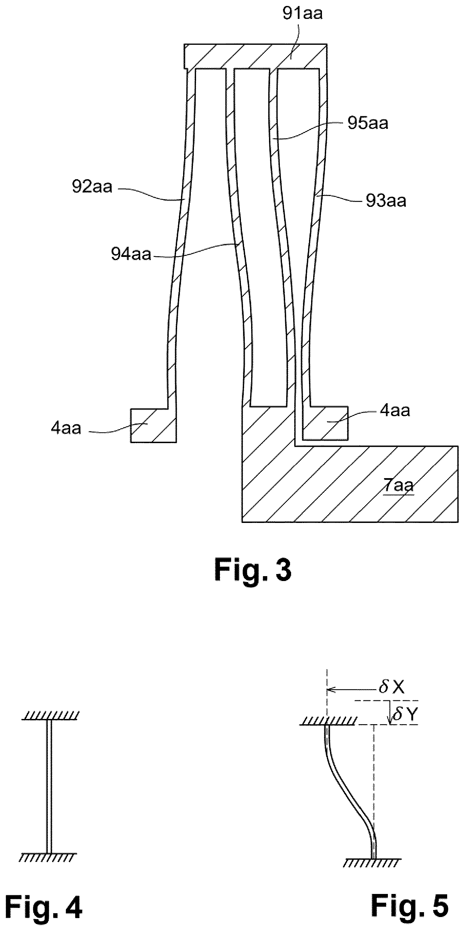

Lors du fonctionnement du gyromètre, les cadres et les masses oscillent selon l'axe X, tandis que le levier 7aa reste fixe (mouvement de pivotement autour de l'axe Δ₃ mis à part). Les deuxièmes liaisons 9aa, 9aa' doivent donc autoriser un déplacement relatif de la masse 4aa, 4aa', par rapport au levier 7aa, selon l'axe X, et cela avec une amplitude très importante. En effet, l'amplitude d'oscillation des cadres, et donc des masses, selon l'axe X, est typiquement compris entre quelques microns et quelques dizaines de microns, ce qui est un déplacement très grand pour un MEMS. Dans les liaisons 9aa, 9aa', cette latitude de mouvement importante est apportée par la flexibilité des poutres, de forme allongée selon l'axe Y (longueur b grande), et peu épaisses dans l'axe X (largeur a faible). La figure 3 illustre très schématiquement cette déformation des poutres, lors d'un déplacement de la masse 4aa dans le sens -X.

Plus généralement, dans un tel gyromètre, il est souhaitable, que la liaison entre masse d'épreuve et levier de détection :
- a) soit apte à transmettre une force parallèlement à l'axe Z, en se déformant peu dans cette direction (i.e. : raideur élevée de la liaison selon l'axe Z), pour que la masse puisse entrainer le levier de détection avec elle selon une direction parallèle à l'axe Z, de manière efficace, lorsqu'elle pivote,
- b) autorise un déplacement relatif ample dans la direction X, avec une raideur faible vis-à-vis de ce déplacement, et avec une non-linéarité faible (pour éviter d'introduire des sources de non-linéarité indésirables dans la dynamique de mouvement de l'ensemble masse-cadre ; linéarité qui n'est pas facile à obtenir vu les amplitudes de déplacement en X), et
- c) présente une raideur en rotation faible vis-à-vis d'une rotation du levier par rapport à la masse, autour d'un axe de la liaison, Δ₂, Δ₂', parallèle à l'axe Y.

Lorsque la masse pivote par rapport au cadre, elle entraine une extrémité du levier avec elle, dans la direction Z, ce qui fait tourner le levier autour de son axe Δ₃. Lors de ce mouvement, on remarque que la masse et le levier pivotent tous les deux l'un par rapport à l'autre. La deuxième liaison 9aa doit ainsi autoriser, au moins en partie, cette rotation de la masse par rapport au levier, autour de l'axe Δ₂, Δ₂' de la liaison.

Concernant le critère c), on remarque que les sources de raideur élastique, qui s'opposent au pivotement de la masse d'épreuve 4aa comprennent : la raideur en rotation due à la première liaison 5aa (raideur en rotation autour de l'axe Δ₁), la raideur en rotation due à la deuxième liaison 9aa (raideur en rotation autour de l'axe Δ₂), ainsi que la raideur de la ou des jauges de contraintes elles-mêmes (employées pour mesurer la rotation du levier de détection) et de la charnière qui leur est associée. Or, parmi ces contributions, il est souhaitable de minimiser la raideur qui n'est pas due aux jauges elles-mêmes, pour qu'un maximum d'énergie soit dirigée vers les jauges afin de maximiser le signal de mesure de rotation (en termes de détection et du point de vue énergétique, il est souhaitable d'éviter d'emmagasiner de l'énergie - sous forme d'énergie élastique - dans les liaisons mécaniques 5aa et 9aa).

La deuxième liaison 9aa représentée sur la figure 2 remplit les critères a) et b) de manière satisfaisante. Elle est très performante en termes d'amplitude de déplacement relatif autorisé dans la direction X, et en termes de linéarité de la réponse force-déplacement.

Mais elle présente en revanche une raideur assez élevée vis-à-vis d'une rotation de la masse par rapport au levier, autour de l'axe Δ₂.

Dans ce contexte, il existe donc un besoin d'une liaison mécanique qui remplisse au moins en partie l'ensemble des critères a), b) et c) ci-dessus, et qui soit plus souple que la liaison 9aa de l'art antérieur vis-à-vis d'une rotation du levier par rapport à la masse (i.e. : vis-à- vis d'une rotation autour d'un axe parallèle à l'axe de détection du gyromètre, c'est-à-dire parallèle à l'axe Y).

Le document EP3407016 A1 concerne un gyroscope microélectromécanique comprenant un substrat avec une masse inertielle suspendue à une structure de suspension qui permet à la première masse inertielle d'osciller en rotation à la fois dans le plan du dispositif et hors du plan du dispositif. La structure de suspension comprend une ou plusieurs suspensions revêtues de structures transductrices piézoélectriques configurées pour détecter les mouvements d'oscillation hors du plan du dispositif ou dans le plan du dispositif.

### RESUME

Pour remédier au moins en partie aux limites de l'art antérieur, la présente technologie concerne alors un dispositif micro-électromécanique comprenant :
- un cadre,
- une masse d'épreuve, reliée au cadre par une première liaison mécanique qui autorise un pivotement de la masse d'épreuve par rapport au cadre autour d'un premier axe de rotation parallèle à un plan moyen du cadre, et
- un levier de détection d'un pivotement de la masse, relié à la masse d'épreuve par une deuxième liaison mécanique autorisant une rotation du levier par rapport à la masse d'épreuve autour d'un deuxième axe, parallèle au premier axe,
- dans lequel la deuxième liaison comprend :
   - une première paroi, perpendiculaire ou quasiment perpendiculaire au deuxième axe de rotation, et
   - une deuxième paroi, parallèle ou quasiment parallèle au deuxième axe de rotation, et perpendiculaire au plan moyen du cadre (lorsque le dispositif est au repos),
   - la première paroi et la deuxième paroi se raccordant perpendiculairement ou quasiment perpendiculairement l'une à l'autre et se raccordant, pour l'une, au levier, et pour l'autre à la masse d'épreuve.

L'extension de la première paroi, perpendiculairement (ou quasiment perpendiculairement) au plan moyen du cadre, rend cette paroi rigide (i.e. : raide) selon la direction Z qui est perpendiculaire au plan moyen du cadre (à la manière d'une règle plate, dont le plan serait vertical, perpendiculaire au plan moyen du cadre). Il en est de même pour la deuxième paroi, si bien que l'ensemble des première et deuxième parois est finalement rigide vis-à-vis de déplacements parallèles à l'axe Z (i.e. : apte à transmettre des forces ou des déplacements parallèles à l'axe Z, en se déformant peu), remplissant ainsi le critère a) présenté plus haut, dans la partie arrière-plan.

En plus de l'axe Z, on a représenté sur les figures un axe X parallèle au plan moyen du cadre et perpendiculaire aux axes de rotation. En pratique, l'axe X correspond à un axe de déplacement du cadre, par rapport à un support du dispositif.

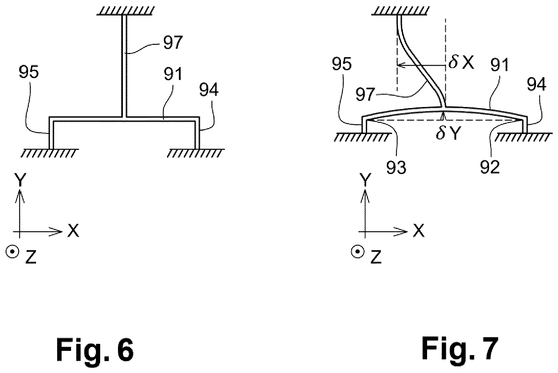

La deuxième paroi mentionnée plus haut, en quelque sorte transverse, est perpendiculaire (ou quasiment perpendiculaire) à l'axe X (en tout cas lorsque la masse est au repos). Elle apporte ainsi la souplesse et l'amplitude de déplacement souhaitées selon l'axe X (critère b) mentionné plus haut), grâce à ses possibilités de déformation en flexion, illustrées sur la figure 7.

Elle apporte par ailleurs à la deuxième liaison la souplesse souhaitée, en termes de rotation de la masse par rapport au levier autour du deuxième axe de rotation, Δ₂. En effet, comme la deuxième paroi s'étend parallèlement ou quasiment parallèlement à l'axe Δ₂ (et comme elle est mince), elle est peu rigide vis-à-vis d'une déformation en torsion autour de l'axe Δ₂, ce qui permet de remplir le critère c) mentionné plus haut.

A ce sujet, on peut d'ailleurs prévoir que la première paroi se raccorde au levier tandis que la deuxième paroi se raccorde à la masse d'épreuve, et que la première paroi soit reliée à la masse d'épreuve seulement par la deuxième paroi, si bien que la souplesse en torsion de la deuxième paroi n'est entravée par aucun autre élément. Au contraire, dans la liaison 9aa de l'art antérieur représentée sur la figure 2, les deux poutres de flexion 94aa et 95aa, qui relient le levier 7aa à l'élément de raccord 91aa, forment une sorte de cadre, et la juxtaposition de ces deux poutres rend la liaison rigide vis-à-vis d'une torsion autour de l'axe Δ₂ (alors qu'une souplesse en torsion serait au contraire souhaitable).

Par ailleurs, la première paroi (ref. 91, sur les figures 6 et 7) permet de limiter la non-linéarité lors de la déformation en flexion de la deuxième paroi 97. Cette non-linéarité, réduite grâce à l'ajout de la première paroi, est une non-linéarité de la relation entre force de rappel (selon la direction X), et déplacement relatif selon l'axe X (déplacement relatif de la masse d'épreuve 4 par rapport au levier 7).

En effet, une liaison qui serait réalisée seulement avec la deuxième paroi, utilisée pour sa déformabilité en flexion, aurait une raideur selon X fortement non linéaire. Cet effet est expliqué en référence aux figures 4 et 5. La figure 4 montre une paroi flexible, raccordée rigidement (encastrée) à ses deux extrémités à deux éléments mobiles l'un par rapport à l'autre. Lorsque l'un de ces éléments se décale d'une quantité δX par rapport à l'autre élément (décalage selon l'axe X), la paroi se déforme en flexion (figure 5). Pour éviter d'augmenter la longueur de la fibre neutre de la paroi, les deux extrémités de la paroi se rapprochent alors légèrement l'une de l'autre, dans la direction Y (perpendiculaire à X), d'une quantité δY. Ainsi, dans une telle situation, le déplacement relatif δX entre les deux extrémités de la paroi de flexion s'accompagne d'un léger déplacement δY selon l'axe Y. Lorsque ce déplacement δY est empêché, c'est-à-dire lorsqu'il est contraint à 0 par la structure du reste du dispositif, une forte résistance s'oppose aux déplacements δX de forte amplitude (puisque, pour ces déplacements, il faut étirer la paroi, c'est-à-dire la faire travailler en extension, alors qu'elle est très raide vis-à-vis d'une déformation en extension). Or le déplacement δY varie de manière non-linéaire en fonction de δX. Lorsque le déplacement δY est empêché, la raideur supplémentaire, forte, due à l'étirement de la fibre neutre, varie donc elle aussi de manière non-linéaire en fonction de δX. Selon l'axe X, la force de rappel totale a donc finalement une composante non-linéaire notable, qui varie non-linéairement en fonction du déplacement δX.

Dans la deuxième liaison conforme à la présente technologie (figures 6 et 7), au lieu de se raccorder directement au levier (ou, respectivement, à la masse d'épreuve), la deuxième paroi 97 est reliée au levier par l'intermédiaire de la première paroi 91 (figure 6). Comme la première paroi peut se déformer facilement en flexion (i.e : avec une raideur faible), l'extrémité 98 de la deuxième paroi 97 peut se déplacer quasiment librement selon l'axe Y (figure 7). Le déplacement δY entre les deux extrémités 98 et 99 de la deuxième paroi 97, mentionné plus haut, consécutif à un déplacement δX selon l'axe X, et non linéaire par rapport à celui-ci, sollicite la très faible raideur en flexion de la première paroi 91. La raideur totale en X est donc dominée par la raideur en flexion de la deuxième paroi 97, sollicitée par le fort déplacement δX, ce qui permet de diminuer notablement la non-linéarité mentionnée plus haut.

Corriger autant que possible la non-linéarité en question est très utile en pratique, car l'amplitude de déplacement de la masse d'épreuve par rapport au levier est très importante (plusieurs microns, voire plusieurs dizaines de microns) et conduirait donc à des effets non-linéaires de grande amplitude, en l'absence de correction.

On notera d'ailleurs à ce sujet que, dans la liaison 9aa de l'art antérieur, la liaison entre levier et masse d'épreuve se fait par l'intermédiaire de l'élément de raccord 91aa qui forme une sorte d'ilot mobile et qui, grâce à ses possibilités de déplacement, autorise le déplacement δY mentionné plus haut, et permet ainsi de corriger très efficacement la non-linéarité en question (les poutres 92aa, 93aa, 94aa et 95aa ayant la même géométrie et subissant les même contraintes, elles se déforment toutes de δY).

Dans le dispositif conforme à la présente technologie, la linéarité de la relation entre force de rappel et déplacement selon l'axe X peut être encore améliorée en reliant l'une, voire les deux extrémités 92, 93 de la première paroi 91, au levier (ou, éventuellement, à la masse d'épreuve), par l'intermédiaire d'une paroi de raccord 94, 95 relativement courte (plus courte que la deuxième paroi), et parallèle à la deuxième paroi 97. Les possibilités de déformation en flexion de cette paroi de raccord 94, 95 permettent alors aux deux extrémités 92, 93 de la première paroi 91 de se rapprocher l'une de l'autre lorsque la première paroi 91 se déforme en flexion (figure 7), limitant ainsi une non-linéarité associée cette fois à l'étirement selon X (non linéaire en δY) de la fibre neutre de la paroi 91. Par ailleurs, comme ces parois de raccord 94, 95 sont courtes, la liaison conserve une bonne rigidité hors plan. On remarquera qu'en introduisant les parois de raccord 94 et 95 on utilise à nouveau le principe de base présenté plus haut, selon lequel on ajoute, à l'extrémité (ou aux deux extrémités) d'une paroi utilisée en flexion (cette fois-ci la paroi 91, au lieu de 97), une autre paroi (cette fois-ci 94 ou 95, au lieu de 91), perpendiculaire ou quasiment perpendiculaire à la paroi (la poutre) utilisée en flexion (91), pour autoriser un déplacement de l'extrémité (92, 93) de la paroi de flexion (91) sensiblement parallèle à cette paroi, afin de limiter l'étirement de sa fibre neutre. L'introduction de ces parois de raccord 94, 95 correspond donc à une réduction progressive, récursive des non-linéarités, dans laquelle on utilise plusieurs fois de suite le principe de base en question (en l'occurrence deux fois de suite, ici). Lors de l'application itérative de ce principe de base, après l'étage numéro 1, c'est-à-dire après la première paroi 91, on utilise de préférence des parois (des poutres) de plus en plus courtes pour ne pas trop altérer la raideur hors plan, et car le déplacement à absorber (déplacement sensiblement parallèle à la poutre de flexion considérée) est de plus en plus faible. Dans le cas où l'on ajoute les parois de raccord 94, 95, en plus de la première paroi 91, ce principe de base est itéré deux fois (une fois avec la première paroi 91, et une autre fois avec les parois de raccord, 94 et 95). Mais il pourrait être itéré plus de deux fois. En pratique, deux itérations s'avèrent un bon compromis entre les performances de la liaison d'une part, et la facilité de fabrication d'autre part.

Les performances de la deuxième liaison vis-à-vis des critères a), b) et c) listés plus haut, et l'amélioration que cette liaison apporte par rapport à l'art antérieur sont illustrées plus bas, dans la description, par des exemples (numériques) obtenus par simulation numérique.

Dans le présent document, on entend par liaison un élément, ou un ensemble d'éléments guidant le mouvement de la masse d'épreuve par rapport au cadre (i.e. : agencés pour articuler la masse avec le cadre), ou guidant le mouvement de la masse d'épreuve par rapport au levier (ou encore le mouvement du cadre, ou du levier par rapport au support du dispositif).

Par paroi, on entend un élément délimité par deux surfaces libres sensiblement parallèles l'une à l'autre (parallèles à mieux que 15 degrés) et séparées par une distance plus petite, et même nettement plus petite que les dimensions de ces surfaces libres. Autrement dit, il s'agit d'un élément (pas nécessairement plan) dont l'étendue surfacique est nettement plus grande que la distance entre les deux surfaces libres de la paroi (i.e. : nettement plus grande que l'étendue de l'élément selon une direction transverse à la paroi).

Dans le présent document, pour la première paroi comme pour la deuxième paroi, le terme « épaisseur » désigne l'extension de la paroi selon la direction Z perpendiculaire aux couches (perpendiculaire au substrat). Il s'agit donc en quelque sorte de la hauteur de la paroi. Le terme « largeur » désigne quant à lui l'extension de la paroi perpendiculairement aux surfaces libres de la paroi (surfaces libres « verticales », parallèles à Z).

D'autre part, dans le présent document, on entend par « quasiment parallèle » et par « quasiment perpendiculaire » : parallèle, ou respectivement perpendiculaire, à mieux que 15 degrés, voire à mieux que 5 degrés ou même 1 degrés.

Outre les caractéristiques mentionnées ci-dessus, le dispositif qui vient d'être présenté peut comporter une ou plusieurs des caractéristiques optionnelles suivantes, considérées individuellement ou selon toutes les combinaisons techniquement envisageables :
- la deuxième liaison est configurée pour que, au niveau de la deuxième liaison, la masse entraine le levier avec elle selon une direction de déplacement hors-plan, perpendiculaire au plan moyen du cadre, lorsque la masse pivote autour du premier axe de rotation ;
- le levier est mobile en rotation (par rapport au support du dispositif) autour d'un axe de détection, parallèle au premier axe de rotation ;
- la première paroi et la deuxième paroi se raccordent l'une à l'autre en formant un **T,** la deuxième paroi correspondant à la barre médiane verticale du T ;
- la première paroi s'étend :
   - d'une première extrémité, raccordée au levier,
   - jusqu'à une deuxième extrémité, raccordée elle aussi au levier ;
- la deuxième paroi s'étend :
   - d'une première extrémité, par laquelle la deuxième paroi se raccorde à la première paroi, dans une zone médiane de la première paroi, entre la première et la deuxième extrémité de la première paroi,
   - jusqu'à une deuxième extrémité par laquelle la deuxième paroi se raccorde à la masse d'épreuve ;
- la première extrémité de la première paroi se raccorde au levier par l'intermédiaire d'une paroi de raccord, qui s'étend de cette première extrémité jusqu'au levier, parallèlement à la deuxième paroi ;
- la deuxième extrémité de la première paroi se raccorde au levier par l'intermédiaire d'une autre paroi de raccord qui s'étend de cette deuxième extrémité jusqu'au levier, parallèlement à la deuxième paroi ;
- la première paroi se raccorde au levier tandis que la deuxième paroi se raccorde à la masse d'épreuve, et la première paroi est reliée à la masse d'épreuve seulement par ladite deuxième paroi.
- la seule liaison directe entre la masse d'épreuve et le levier (directe, c'est-à-dire sans passer par un autre élément du dispositif, tel que le cadre) est ladite deuxième liaison ;
- la deuxième liaison comprend en outre :
   - une première paroi supplémentaire, perpendiculaire au deuxième de rotation, et
   - une deuxième paroi supplémentaire, parallèle au deuxième axe de rotation,
   - la première paroi supplémentaire et la deuxième paroi supplémentaire se raccordant perpendiculairement l'une à l'autre et se raccordant, pour l'une, au levier, et pour l'autre à la masse d'épreuve,
   - la deuxième paroi et la deuxième paroi supplémentaire étant situées dans le prolongement l'une de l'autre ;
- la deuxième paroi et la deuxième paroi supplémentaire sont alignées l'une avec l'autre ;
- la deuxième paroi et la deuxième paroi supplémentaire s'étendent chacune le long du deuxième axe de rotation ;
- la première paroi a, selon une direction parallèle au levier, une longueur supérieure à vingt fois une largeur présentée par la première paroi selon une direction perpendiculaire au levier, voire supérieure à quarante fois sa largeur ou même supérieure à quatre-vingts fois sa largeur ;
- selon une direction perpendiculaire au plan moyen du cadre, la première paroi s'étend sur une épaisseur supérieure à quatre fois sa largeur voire supérieure à dix fois sa largeur ;
- la deuxième paroi a, parallèlement au deuxième axe de rotation, une longueur supérieure à vingt fois une largeur présentée par la deuxième paroi selon une direction perpendiculaire au deuxième axe de rotation, voire supérieure à quarante fois sa largeur ;
- selon une direction perpendiculaire au plan moyen du cadre, la deuxième paroi s'étend sur une épaisseur supérieure à quatre fois sa largeur, voire supérieure à dix fois sa largeur ;
- le dispositif est de type gyromètre ;
- le cadre et la masse d'épreuve sont appelés respectivement premier cadre et première masse d'épreuve, et le dispositif comprend en outre :
   - un deuxième cadre,
   - une deuxième masse d'épreuve, reliée au deuxième cadre par une première liaison supplémentaire qui autorise un pivotement de la deuxième masse d'épreuve par rapport au deuxième cadre autour d'un premier axe de rotation supplémentaire, parallèle au premier axe de rotation, et
   - la deuxième masse d'épreuve est reliée elle aussi au levier de détection, par une deuxième liaison supplémentaire autorisant une rotation du levier par rapport à la deuxième masse d'épreuve autour d'un deuxième axe de rotation supplémentaire, parallèle au premier axe de rotation,
   - le levier étant relié d'un côté la première masse d'épreuve, et de l'autre à la deuxième masse d'épreuve ;
- l'axe de détection est fixe par rapport à ce support ;
- la deuxième liaison, et la deuxième liaison supplémentaire reliant le levier de détection à la deuxième masse d'épreuve, sont situées à l'opposé l'une de l'autre par rapport à l'axe de détection ;
- le dispositif comprend en outre un support, et le premier cadre et le deuxième cadre sont tous deux guidés en translation par rapport au support selon un axe de déplacement qui est parallèle à un plan moyen du cadre et qui est perpendiculaire au premier axe de rotation ;
- le dispositif comprend en outre un système d'actionnement électromécanique configuré pour imposer à chacun des cadres une oscillation selon ledit axe de déplacement, le déplacement du premier cadre par rapport au support, et le déplacement du deuxième cadre par rapport au support ayant une même amplitude et des sens opposés l'un à l'autre.

La présente technologie et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif.
[Fig. 1] représente schématiquement un gyromètre à deux cadres mobiles.
[Fig. 2] est une vue schématique partielle, de dessus, d'une liaison mécanique du gyromètre de la figure 1, cette liaison reliant l'une des masses d'épreuve du gyromètre à un levier de détection.
[Fig. 3] représente schématiquement la liaison de la figure 2, dans une situation où la masse d'épreuve s'est déplacée selon l'axe X par rapport à sa position de repos.
[Fig. 4] représente schématiquement une paroi flexible reliant deux éléments, vue de dessus.
[Fig. 5] représente schématiquement la façon dont la paroi de la figure 4 se déforme en flexion pure.
[Fig. 6] est une représentation de principe d'une liaison mettant en œuvre la présente technologie, cette liaison reliant la masse d'épreuve d'un dispositif micro-électromécanique à un levier de détection de pivotement de cette masse.
[Fig. 7] représente schématiquement la liaison de la figure 6, dans situation où la masse d'épreuve s'est déplacée par rapport à sa position de repos, selon un axe de déplacement X.
[Fig. 8] est une représentation schématique en perspective d'un gyromètre à deux cadres mobiles mettant en œuvre la présente technologie.
[Fig. 9] représente schématiquement une partie du gyromètre de la figure 8, vu de côté.
[Fig. 10] est une vue de détail, en perspective, d'une zone centrale du gyromètre de la figure 8.
[Fig. 11] représente schématiquement, en coupe et vu de côté, un levier de détection et des jauges de contrainte du gyromètre de la figure 8.
[Fig. 12] est une vue de détail, en coupe et vue de côté, de ces jauges de contraintes.
[Fig. 13] représente schématiquement un premier mode de réalisation d'une liaison mécanique qui, dans le gyromètre de la figure 8, relie l'une des masses d'épreuve au levier de détection, vu de dessus.
[Fig. 14] représente à nouveau le premier mode de réalisation de cette liaison, partiellement et vu de dessus.
[Fig. 15] représente schématiquement et partiellement un deuxième mode de réalisation de la liaison mécanique en question, vu de dessus.
[Fig. 16] représente schématiquement et partiellement un troisième mode de réalisation de la liaison mécanique en question, vu de dessus.
[Fig. 17] représente schématiquement et partiellement un quatrième mode de réalisation de la liaison mécanique en question, vu de dessus ;
[Fig. 18] représente schématiquement et partiellement un cinquième mode de réalisation de la liaison mécanique en question, vu de dessus ;
[Fig. 19] représente schématiquement et partiellement un sixième mode de réalisation de la liaison mécanique en question, vu de dessus ;
[Fig. 20] représente schématiquement et partiellement un septième mode de réalisation de la liaison mécanique en question, vu de dessus ;
[Fig. 21] représente schématiquement et partiellement un huitième mode de réalisation de la liaison mécanique en question, vu de dessus ;

### DESCRIPTION DETAILLEE

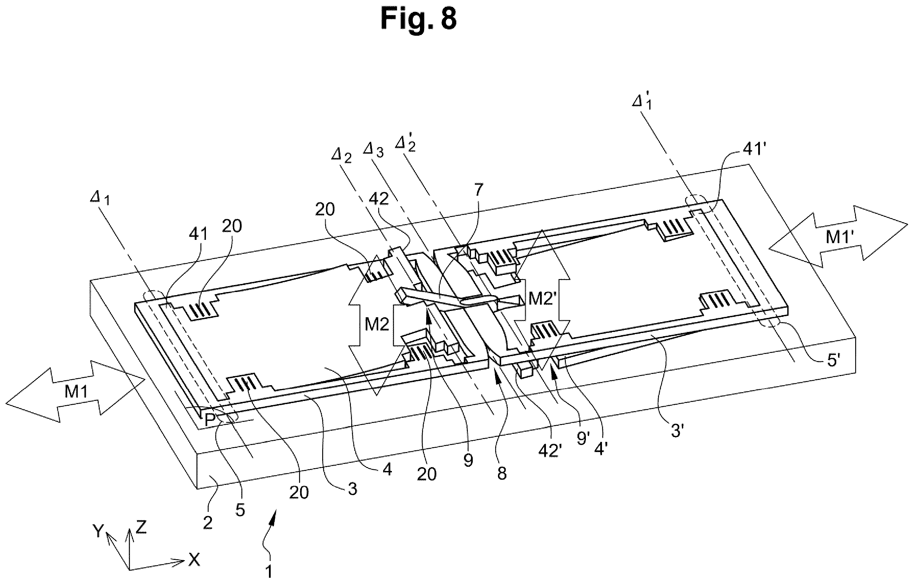

Les figures 8, 9 et 10 montrent un dispositif 1, de type gyromètre, mettant en œuvre la présente technologie. Ce gyromètre 1 est un gyromètre à double cadre et à mouvement hors-plan, qui permet de mesurer une vitesse de rotation autour d'un axe Y parallèle au plan moyen du substrat à partir duquel est réalisé le gyromètre 1.

La majeure partie de ce substrat forme une couche, épaisse, qui sert de support 2.

Le gyromètre 1 comprend deux cadres mobiles 3 et 3' guidés chacun en déplacement, par rapport à ce support 2, selon un axe X qui est parallèle au plan moyen du support. Chaque cadre 3 ; 3' est parallèle au support 2. Autrement dit, pour chaque cadre 3, 3', le plan moyen P du cadre est parallèle au plan moyen du support 2. Dans la suite, l'orientation de différents axes et parois sont repérées par rapport au plan moyen P du cadre 3, 3', ou, indifféremment, par rapport au plan moyen du support 2 (puisque ces deux plans moyens sont parallèles l'un à l'autre).

L'axe de déplacement des cadres, X, est perpendiculaire à l'axe de mesure de vitesse angulaire de rotation, Y. L'axe de déplacement des cadres, X, et l'axe de mesure de vitesse angulaire, Y, sont reportés sur les différentes figures, de même qu'un axe Z, perpendiculaire au plan moyen du support (perpendiculaire à X et Y).

Pour chaque cadre, le guidage du cadre par rapport au support est obtenu par exemple grâce à des quatre ressorts 20, disposés en quatre points du cadre éloignés les uns des autres, chaque ressort 20 reliant le cadre au support en autorisant un déplacement relatif parallèlement à l'axe X. Les ressorts 20 comprenant ici des lames travaillant en flexion, qui relient le support 2 au cadre considéré 3, 3'. Les cadres 3 et 3' ont une forme d'ensemble rectangulaire, ici.

Lors du fonctionnement du gyromètre, les deux cadres sont mis en mouvement, par exemple par actionnement électrostatique au moyen de peignes interdigités (non représentés), de manière à osciller parallèlement à l'axe X, en opposition de phase l'un par rapport à l'autre (de manière symétrique). Les deux cadres ont alors la même vitesse, mais des sens de déplacement, par rapport au support 2, qui sont opposés l'un à l'autre.

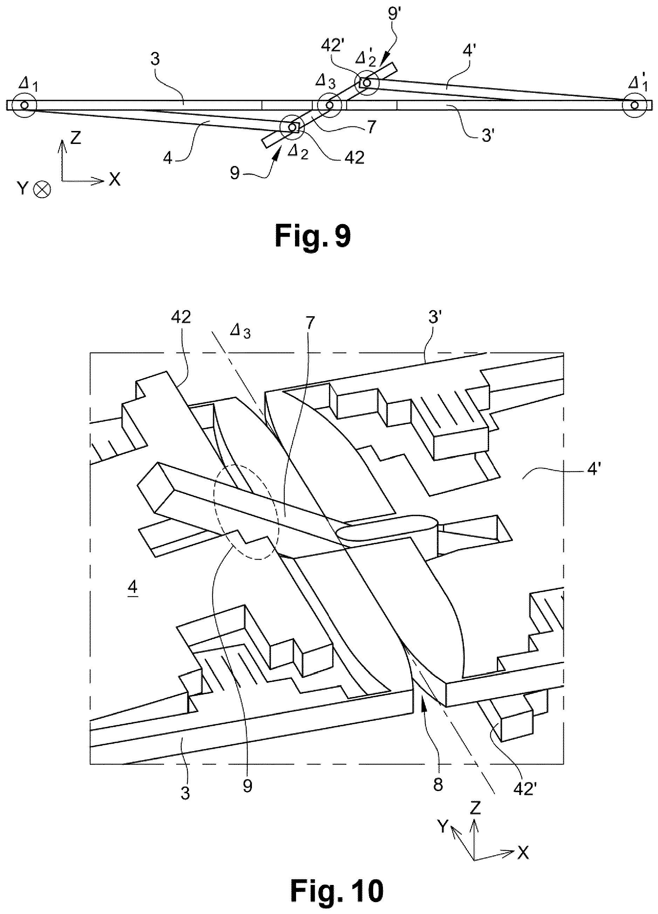

Les deux cadres 3 et 3' sont agencés en vis-à-vis l'un de l'autre, de part et d'autre d'une portion centrale 8, fixe (i.e. : sans mouvement par rapport au support 2) du gyromètre. Sur les figures 8 et 10, le détail de cette portion centrale 8 n'est pas représenté, pour ne pas encombrer la figure. Autrement formulé, les figures 8 et 10 sont des vues partielles. La limite entre parties non-représentées et parties représentées est repérée sur chacune de ces figures par des trois coutres lignes ondulées, en trait épais.

Chaque cadre 3, 3' entraine avec lui une masse d'épreuve 4, 4' (appelée aussi masse Coriolis), qui est reliée au cadre par une première liaison 5, 5' qui autorise un pivotement de la masse d'épreuve autour d'un premier axe de rotation Δ₁, Δ'₁ parallèle à l'axe Y. Cette liaison s'apparente en partie à une liaison pivot, ou, autrement dit, à une charnière. La première liaison 5, 5' est rigide vis-à-vis de déplacements relatifs entre la masse et le cadre dirigés selon l'axe X (tandis que les deuxièmes liaisons 9, 9' présentés plus bas sont au contraire souples selon l'axe X). Du fait de ce fort couplage, on obtient, pour le mouvement d'oscillation de chaque ensemble masse - cadre, par rapport au support, parallèlement à l'axe X, quasiment une seule fréquence de résonance, comprise typiquement entre 1 et 100 kHz (voire entre 5 et 50 kHz).

Comme on peut le voir sur la figure 8, chaque masse 4, 4' d'épreuve a ici une forme d'ensemble qui est celle d'une plaque (approximativement parallélépipédique), parallèle au plan moyen P du cadre 3, 3' lorsque la masse est au repos. Cette plaque est entourée par le cadre correspondant, sur la majeure partie de son périmètre. Chaque masse 4, 4' s'étend d'une première extrémité 41, 41' jusqu'à une deuxième extrémité 42, 42'. L'axe moyen de la masse d'épreuve 4, 4', qui relie sa première extrémité à sa deuxième extrémité, est parallèle à l'axe de déplacement, X.

La première extrémité 41, 41' est reliée au cadre 3, 3' par la première liaison 5, 5' mentionnée plus haut, tandis que la deuxième extrémité 42, 42' de la masse peut se déplacer « hors plan », selon une direction parallèle à l'axe Z, lorsque la masse 4, 4' pivote autour de son axe de rotation Δ₁, Δ'₁.

Pour chaque masse 4, 4', la première extrémité 41, 41' est située, par rapport au reste de la masse d'épreuve 4, 4', à l'opposé de l'autre masse d'épreuve 4', 4 (et donc à l'opposé de l'autre cadre 3'). Tandis que la deuxième extrémité 42, 42', est située au contraire du côté de l'autre masse d'épreuve 4', 4 quasiment en vis-à-vis de l'autre masse, dans une zone centrale du gyromètre 1. En d'autres termes, chaque masse d'épreuve 4, 4' est reliée à son cadre 3, 3' (par la première liaison 5, 5') du côté en quelque sorte externe du cadre, d'un côté de cette masse situé à l'opposé de l'autre masse d'épreuve 4', 4.

Chaque masse d'épreuve 4, 4' est reliée, du côté de sa deuxième extrémité 42, 42', à un levier de détection de rotation commun, 7, par une liaison mécanique 9, 9'. Ce levier 7 pivote autour d'un axe de détection Δ₃, qui est parallèle à l'axe Y et qui est fixe (ou tout au moins essentiellement fixe) par rapport au support 2. Le levier 7 est relié ici au support 2 par une liaison remplissant le rôle d'une charnière (raide en translation selon X,et Z, et relativement souple vis-à-vis d'une rotation autour de l'axe de détection Δ₃). Le levier 7 est situé dans la zone centrale du gyromètre, entre les deux masses d'épreuve. Le levier 7 a une forme de poutre, centrée sur l'axe moyen du gyromètre (axe moyen qui est parallèle à X), lorsque le gyromètre est au repos.

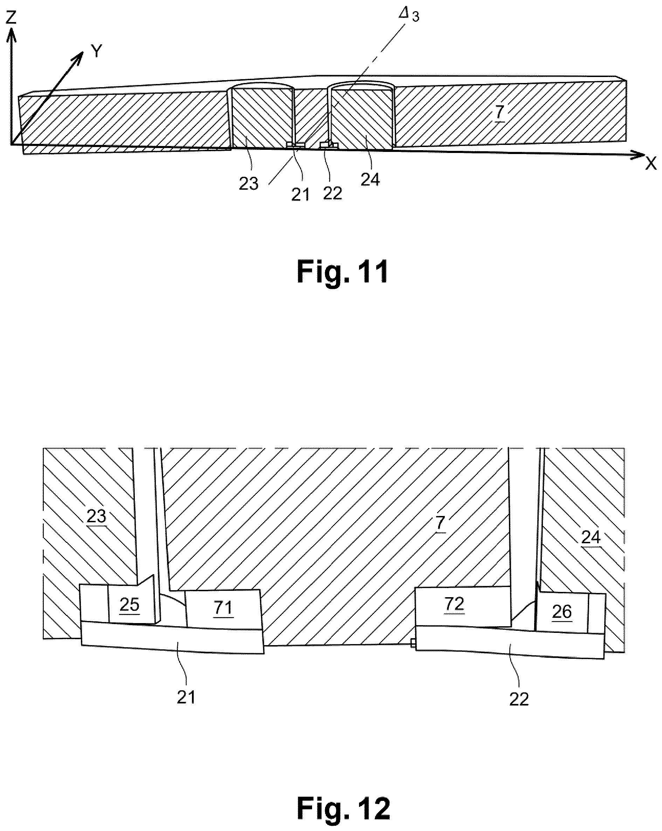

Lorsque le gyromètre 1 tourne (i.e. : lorsque le support 2 tourne) par rapport à un référentiel inertiel, par exemple par rapport au référentiel galiléen, autour de l'axe Y, avec une vitesse angulaire Ω̅ = Ωy̅, chaque masse 4, 4' subit alors une force de Coriolis, qui s'exprime comme F̅*_{cor}* = 2 *m_{cor}* (*vx̅*) ∧ (Ωy̅) où m_{cor} représente la masse de l'une quelconque des masses d'épreuve 4, 4' et où v est sa vitesse de déplacement (selon l'axe X). Cette force est donc dirigée selon l'axe Z et elle est de même amplitude mais de sens opposé pour les deux masses d'épreuve 4 et 4' (puisque les deux masses sont entrainées en sens opposés). Pour chacune de ces deux masses, cette force entraine donc un déplacement de sa deuxième extrémité 42, 42', selon l'axe Z (ou, autrement formulé, un pivotement de la masse autour du premier axe de rotation Δ₁, Δ'₁), dans un sens opposé pour les deux masses 4, 4', ce qui fait alors tourner le levier de détection 7 autour de l'axe de détection Δ₃ (voir la figure 9). Cette rotation du levier est mesurée, ici grâce à des jauges de contrainte piézo-résistives 21, 22 (figures 11 et 12), pour en déduire la vitesse angulaire Ω.Sur les figures 8 à 10, l'amplitude de déplacement selon l'axe Z est exagérée (i.e. : ce déplacement n'est pas représenté à l'échelle), pour le rendre bien visible. En pratique, l'amplitude d'oscillation des cadres, selon l'axe X, est de l'ordre d'une dizaine de microns (ce qui est très élevé, pour un MEMS), tandis que le déplacement, selon l'axe Z, des deuxièmes extrémités des masses est par exemple de l'ordre de 0,1 micron. Sur ces figures, le déplacement des cadres et des masses selon l'axe X est représenté schématiquement par les doubles flèches M1 et M1', tandis que le déplacement selon l'axe Z des deuxièmes extrémités des masses est schématisé par les doubles flèches M2 et M2'.

Chaque première liaison 5, 5' présente une certaine raideur, s'opposant à une rotation de la masse d'épreuve correspondante 4, 4' autour du premier axe de rotation Δ₁, ou Δ'₁. A cette raideur en rotation s'ajoute :
- la raideur des jauges de contrainte,
- la raideur de la charnière qui relie le levier 7 au support 2,
- et la raideur en rotation de la deuxième liaison 9, 9', qui relie la masse 4, 4' et le levier 7.

Le mouvement de rotation de la masse 4, 4' autour de son axe de rotation Δ₁, Δ'₁ est associé à une fréquence de résonance, choisie par exemple de manière à être proche (légèrement supérieure, par exemple de 1 à 10%) de la fréquence de résonance de l'ensemble cadre-masse dans son oscillation parallèlement à X (fréquence à laquelle le système est excité pour obtenir de grands déplacements). Cela permet d'obtenir un signal de mesure de la vitesse angulaire Ω plus grand.

Quoiqu'il en soit, l'architecture d'ensemble du gyromètre, avec deux masses d'épreuve 4 et 4' qui oscillent de manière symétrique et qui actionnent le même levier de détection 7 de rotation, est particulièrement intéressante car elle permet une détection différentielle de la vitesse angulaire de rotation Ω, ce qui améliore beaucoup le rapport signal sur bruit de ce gyromètre 1 tout en atténuant fortement l'effet des vibrations sur les parties mobiles.

Les figures 11 et 12 montrent comment sont agencées les jauges 21 et 22. Chacune de ces jauges 21, 22 se raccorde, d'un côté au levier 7, et de l'autre à un plot d'ancrage de la jauge, 23, 24. Chaque plot d'ancrage est solidaire du support 2. Ici, les plots d'ancrage sont logés au moins en partie dans des ouvertures ou logements ménagés dans le levier 7, avec un espacement suffisant entre les plots et le levier pour permettre au levier de pivoter autour de l'axe de détection Δ₃. Les deux plots d'ancrage sont situés respectivement d'un côté et de l'autre de l'axe de détection Δ₃.

Les deux jauges de contraintes 21, 22 sont situées en partie inférieure du levier. Elles s'étendent dans le prolongement d'une face inférieure du levier (face inférieure qui est la face du levier située du côté du support).

Les jauges de contrainte 21, 22 peuvent, comme ici, être formées chacune par une portion d'une couche supérieure mince en silicium d'un substrat SOI, en silicium sur isolant, à partir duquel est fabriqué le gyromètre.

Un tel substrat SOI comprend une couche support, épaisse (en général au moins 100 microns d'épaisseur, généralement plus), recouverte par une couche isolante, généralement en oxyde de silicium, elle-même recouverte par la couche supérieure mince, en silicium, souvent appelée couche Si-top. Cette couche Si-top, a, par fabrication, une épaisseur t_{NEMS} réduite (par exemple de 250 nm) et très bien contrôlée. Elle est par ailleurs essentiellement monocristalline, et donc propice à la réalisation des jauges piézo-résistives 21, 22. Lors de la fabrication du gyromètre, une couche supplémentaire de silicium (ou éventuellement d'un autre matériau), assez épaisse (d'épaisseur h = t_{MEMS} - t_{NEMS}), est déposée sur la couche Si-top, pour former l'essentiel des masses d'épreuve et des cadres (d'épaisseur totale t_{MEMS}). Cette couche supplémentaire est polycristalline ou monocristalline, et son épaisseur h est typiquement de quelques microns ou dizaines de microns. Lors de la fabrication du gyromètre, la couche Si-top et cette couche supplémentaire sont gravées pour définir les différents éléments du gyromètre. La couche d'oxyde de silicium mentionnée plus haut, située sous la couche Si-top, est retirée (par attaque chimique) notamment sous les parties du gyromètre qui sont mobiles par rapport au support (cadres et masses d'épreuve notamment), pour libérer ces parties mobiles. Après fabrication, la couche support, épaisse, du substrat SOI forme le support 2 du gyromètre. Dans un tel dispositif, la couche Si-top, ou les éléments issus de cette couche sont parfois appelés couche NEMS (pour système nano-électromécanique).

Les deux jauges de contrainte 21, 22 sont situées respectivement d'un côté et de l'autre de l'axe de détection Δ₃. Par ailleurs, l'axe de détection Δ₃ est décalé par rapport aux jauges (du fait du positionnement et de la configuration de la charnière mentionnée plus haut, qui relie le levier 7 au support 2), en ce sens qu'il n'est pas situé dans le prolongement des jauges (en pratique, l'axe Δ₃ est situé à une côte z différente de celles des jauges). Ainsi, lors d'une rotation du levier autour de cet axe, l'une des jauges est étirée, tandis que l'autre est comprimée, ce qui contribue au caractère différentiel de la mesure de vitesse angulaire. Sur les figures 11 et 12, le levier 7 est représenté dans une position qui est légèrement inclinée (autour de l'axe Δ₃) par rapport à la position, de référence, qu'il occupe lorsque la vitesse angulaire Ω est nulle. Dans la situation représentée, la jauge 22 est comprimée tandis que la jauge 21 est étirée (figure 12).

Ici, chaque jauge de contrainte prend la forme d'une poutrelle, ou d'une membrane s'étendant parallèlement à l'axe X.

Des dégagements 25, 26, 71 et 72 sont pratiqués, à la fois dans les plots d'ancrage et dans le levier, autour de la zone occupée par chaque jauge de contrainte 21, 22 (cela résulte ici du mode de fabrication des jauges, et permet de délimiter nettement les jauges)

Les deuxièmes liaisons 9 et 9', qui relient le levier 7 respectivement à la masse d'épreuve 4, et à la masse d'épreuve 4', sont maintenant présentées plus en détail.

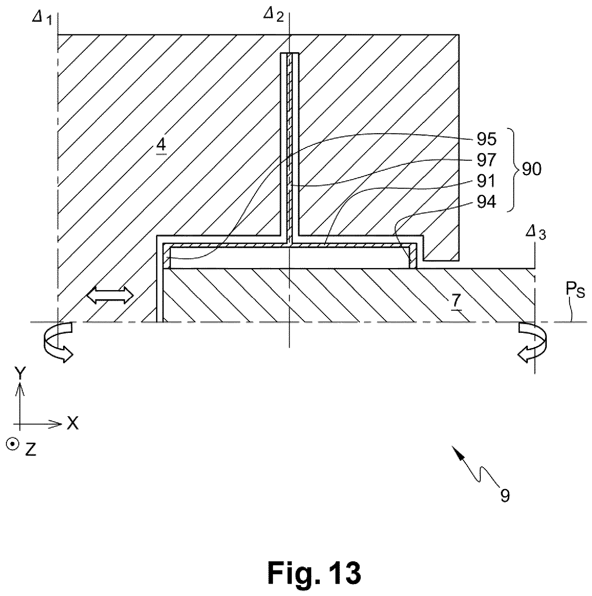

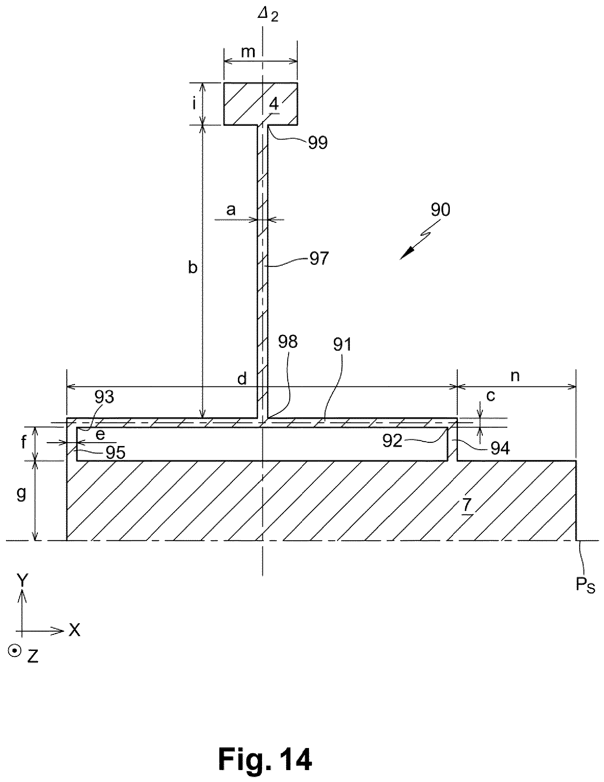

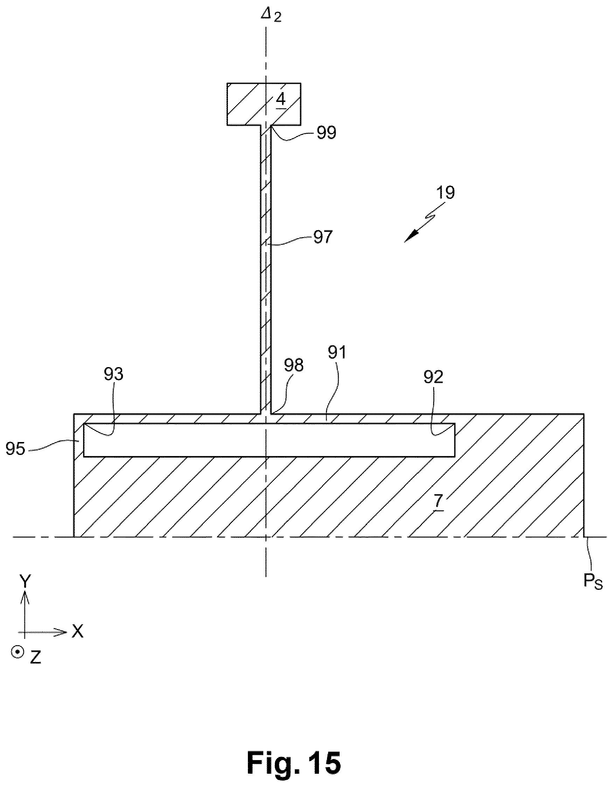

Ici, ces deux liaisons sont identiques. Aussi, seule l'une de ces deux liaisons, 9, sera décrite ici en détail. Cette liaison 9, telle que représentée sur les figures 13 et 14, correspond à un premier mode de réalisation envisageable pour la liaison entre le levier et la masse d'épreuve considérée. Un deuxième, troisième et quatrième modes de réalisation d'une telle liaison, bien adaptée pour relier le levier 7 à la masse d'épreuve 4, sont représentés respectivement sur les figures 15, 16 et 17, et sont repérés respectivement par les références 19, 29 et 39. La liaison 19 ; 29 ; 39 selon l'un quelconque de ces trois modes de réalisation pourrait ainsi remplacer la liaison 9, 9', dans le gyromètre 1 de la figure 8.

D'un mode de réalisation à l'autre, les éléments identiques (ou, tout au moins, correspondant) sont repérés autant que possible par la même référence.

Dans ces quatre modes de réalisation, la deuxième liaison 9 ; 19 ; 29 ; 39 comprend deux demi-liaisons, situées respectivement d'un côté et de l'autre du levier 7, de part et d'autre d'un plan de symétrie de la liaison, Ps (plan de symétrie qui est perpendiculaire à l'axe Y). Ici, le plan de symétrie Ps est aussi un plan de symétrie pour de l'ensemble masse-levier. Les deux demi-liaisons en question sont situées en face l'une de l'autre. Elles sont symétriques l'une de l'autre par rapport au plan de symétrie Ps. La figure 13 montre les deux demi-liaisons, 90 et 90s, qui, ensemble, forment la liaison 9 du premier mode de réalisation. Les figures 14 à 17 montrent ensuite, pour chacun de ces quatre modes de réalisation, l'une des deux demi-liaisons formant la liaison en question, 9 ; 19 ; 29 ; 39 (l'autre demi-liaison étant symétrique).

Dans ces quatre modes de réalisation, la demi-liaison en question comprend :
- une première paroi 91 ; 391, perpendiculaire à un deuxième axe de rotation Δ₂, et
- une deuxième paroi 97, perpendiculaire au plan moyen P du cadre 3 (en toute rigueur, perpendiculaire au plan moyen du cadre lorsque la masse est dans sa position de repos), et parallèle au deuxième axe de rotation Δ₂,
- la première paroi 91 ; 391 et la deuxième paroi 97 se raccordant perpendiculairement l'une à l'autre et se raccordant, pour l'une, au levier 7, et pour l'autre à la masse d'épreuve 4.

Le deuxième axe de rotation Δ₂, qui est l'axe de rotation de la deuxième liaison, est parallèle au premier axe de rotation Δ₁. Lors des l'oscillation des cadres 3, 3', les positions des premiers axes de rotation Δ₁, Δ'₁ varient (ces axes sont translatés), puisque les cadres se déplacent par rapport au support 2. On pourra noter que la position en X des deuxièmes axes de rotation Δ₂, Δ'₂ ne varie pas nécessairement de la même quantité que la position en X des premiers axes Δ₁, Δ'₁.

Comme expliqué en détail dans la partie « résumé », grâce à cet agencement particulier, la deuxième liaison 9 ; 19 ; 29 ; 39 :
- a) est apte à transmettre une force parallèlement à l'axe Z, en se déformant peu dans cette direction (i.e. : raideur élevée de la liaison selon l'axe Z, grâce à l'extension t_{MEMS} notable des parois 91 ; 391 et 97 selon l'axe Z) ; cela permet, à la masse d'épreuve 4 d'entrainer le levier 7 avec elle selon une direction parallèle à l'axe Z, de manière efficace, lorsque la masse d'épreuve pivote ;
- b) autorise un déplacement relatif ample de la masse 4 par rapport au levier 7, selon la direction X, avec une raideur faible vis-à-vis de ce déplacement (grâce aux possibilités de déformation en flexion de la deuxième paroi 97), et avec une non-linéarité faible (grâce à l'ajout de la première paroi 91 ; 391 qui autorise les déplacements selon Y de l'extrémité 98 de la deuxième paroi 97, à la jonction entre ces deux parois), et
- c) présente une raideur en rotation faible vis-à-vis d'une rotation du levier 7 par rapport à la masse 4, autour de l'axe de la liaison, qui est le deuxième axe de rotation Δ₂ (grâce aux possibilités de déformation en torsion de la deuxième paroi 97 autour de cet axe).

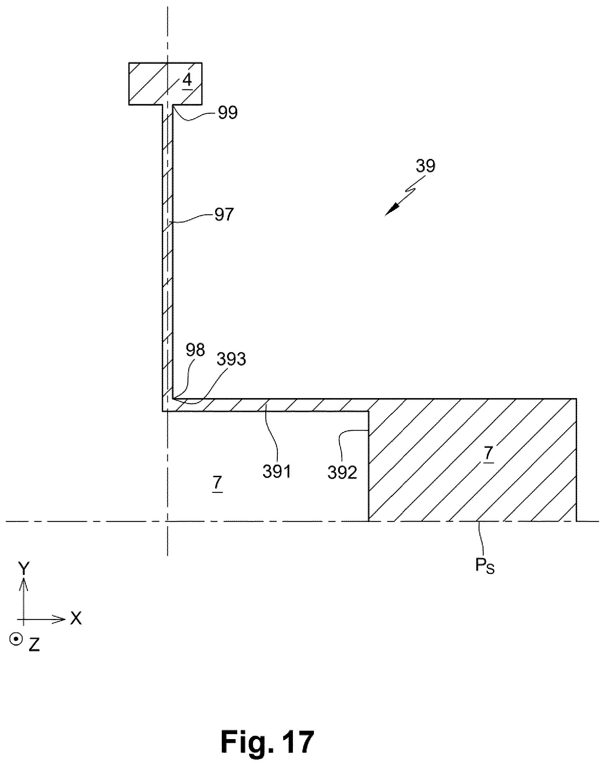

Dans les modes de réalisation représentés, la première paroi 91 ; 391 se raccorde (directement, ou par l'intermédiaire d'une ou deux parois de raccord 94, 95) au levier 7, tandis que la deuxième paroi 97 se raccorde (directement) à la masse d'épreuve 4, les première et deuxième parois se raccordant par ailleurs l'une à l'autre, à angle droit, par exemple en formant un T (inversé), comme sur les figures 13 à 16, ou en formant un L (figure 17). En variante, la première paroi pourrait au contraire se raccorder à la masse d'épreuve tandis que la deuxième paroi se raccorderait au levier (autrement formulé, pour les différents modes de réalisation présentés ici, la configuration de chaque demi-liaison pourrait être inversée).

Quoi qu'il en soit, ici, la première paroi 91 ; 391 est reliée à la masse d'épreuve seulement par la deuxième paroi 97 en question (et non par plusieurs parois flexibles situées côte à côte, comme c'est le cas dans la liaison 9aa de l'art antérieur présentée plus haut en référence à la figure 2), ce qui contribue à la souplesse de la liaison en termes de rotation autour du deuxième axe Δ₂.

Plus généralement, la seule liaison mécanique qui relie directement la deuxième extrémité 42 de la masse d'épreuve 4 au levier 7 (c'est-à-dire qui les relie sans passer par l'intermédiaire d'un autre élément, tel que le cadre 3) est la deuxième liaison 9 ; 19 ; 29 ; 39 en question. Et, dans la deuxième liaison, seule la deuxième paroi 97 (ainsi qu'une autre deuxième paroi 97s, symétrique de la deuxième paroi 97 et appartenant à l'autre demi-liaison, 90s) se raccorde directement à la masse d'épreuve 4.

Comme indiqué plus haut, dans les différents modes de réalisation représentés, la deuxième liaison 9 ; 19 ; 29 ; 39 comprend deux demi-liaisons 90, 90s. La première demi-liaison (90, sur la figure 13) comprend la première paroi 91 ; 391, et la deuxième paroi 97 mentionnées plus haut. La deuxième demi-liaison (90s, sur la figure 13) comprend :
- une première paroi supplémentaire 91s, perpendiculaire au deuxième de rotation, Δ₂, et
- une deuxième paroi supplémentaire 97s, parallèle au deuxième axe de rotation, Δ₂,
- la première paroi supplémentaire 91s et la deuxième paroi supplémentaire 97s se raccordant perpendiculairement l'une à l'autre et se raccordant, pour l'une, au levier 7, et pour l'autre à la masse d'épreuve 4,
- la deuxième paroi 97 et la deuxième paroi supplémentaire 97s étant situées dans le prolongement l'une de l'autre.

Ici, la deuxième paroi 97 et la deuxième paroi supplémentaire 97s sont alignées l'une avec l'autre, et s'étendent chacune le long du deuxième axe de rotation Δ₂.

Dans les différents modes de réalisation représentés, la deuxième paroi 97 s'étend, parallèlement à l'axe Y :
- d'une première extrémité 98, par laquelle la deuxième paroi se raccorde, directement, rigidement à la première paroi 91 ; 391 (en formant un encastrement, d'un point de vue mécanique),
- jusqu'à une deuxième extrémité 99 par laquelle la deuxième paroi 97 se raccorde, directement, rigidement, à la masse d'épreuve 4.

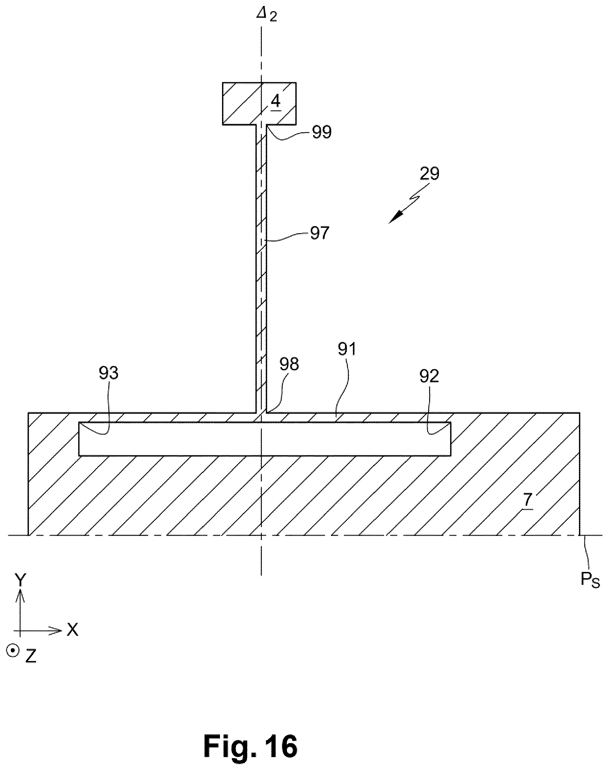

Quant à la première paroi 91, dans les trois premiers modes de réalisation (figures 13 à 16), elle s'étend :
- d'une première extrémité 92, raccordée au levier 7 soit directement et rigidement (figures 15 et 16), soit raccordée au levier par l'intermédiaire d'une première paroi de raccord 94 (figures 13, 14),
- jusqu'à une deuxième extrémité 93, raccordée elle aussi au levier 7, soit directement et rigidement (figure 16), soit par l'intermédiaire d'une deuxième paroi de raccord 95 (figures 13, 14 et 15).

L'axe qui relie la première extrémité 92 à la deuxième extrémité 93 est parallèle au levier 7.

Dans ces trois premiers modes de réalisation, la première extrémité 98 de la deuxième paroi se raccorde (directement et rigidement) à la première paroi 91 dans une zone médiane de la première paroi 91, entre la première et la deuxième extrémités 92, 93 de la première paroi. Comme indiqué plus haut, les première et deuxième paroi ont alors, ensemble, une forme de T (inversé).

Dans le quatrième mode de réalisation (figure 17), la première paroi 391 s'étend :
- d'une première extrémité 392, raccordée directement et rigidement au levier 7,
- jusqu'à une deuxième extrémité 393, raccordée (directement et rigidement) à la première extrémité 98 de la deuxième paroi 97.

L'axe qui relie la première extrémité 392 à la deuxième extrémité 393 est là aussi parallèle à l'axe X (en toute rigueur, parallèle à l'axe X lorsque le levier est au repos, aligné avec l'axe X).

Dans les différents modes de réalisation considérés ici, les première et deuxième parois sont minces.

A ce sujet, on notera que les figures 13 à 17 sont des vues de dessus (le plan de la figure étant à chaque fois parallèle aux axes X et Y), si bien que l'extension selon l'axe Z des première et deuxième parois, t_{MEMS}, n'est pas visible sur ces figures (extension qui, en l'occurrence, est notablement plus grande que la largeur de ces parois). Ces figures montrent d'ailleurs les liaisons 9 ; 19 ; 29 ; 39 dans une situation de repos, dans laquelle les masses d'épreuves, les cadre et le levier sont immobiles, occupant leur position de repos.

Dans ces différents modes de réalisation, la deuxième paroi 97 a, parallèlement au deuxième axe de rotation Δ₂, entre ses deux extrémités 98 et 99, une longueur b supérieure à vingt fois sa largeur a (i.e. : supérieure à vingt fois son extension selon la direction X), voire supérieure à quarante fois sa largeur a. Par ailleurs, selon la direction Z, elle s'étend sur une épaisseur t_{MEMS} supérieure à quatre fois sa largeur a, voire supérieure à dix fois sa largeur a.

A titre d'exemple, la longueur b de la deuxième paroi peut être comprise entre 30 et 150 microns. Sa largeur a peut être comprise entre 0,5 et 5 microns, et son épaisseur t_{MEMS} peut être comprise entre 5 et 100 microns.

Dans les différents modes de réalisation considérés ici, la première paroi 91 ; 391 a, entre sa première extrémité 92 ; 392 raccordée au levier et la jonction avec la deuxième paroi 97, une longueur supérieure à vingt fois sa largeur c (i.e. : supérieure à vingt fois son extension selon la direction Y), voire supérieure à quarante fois sa largeur c. Dans le cas des premier, deuxième et troisième modes de réalisation, la première paroi 91 a ainsi, entre ses deux extrémités 92 et 93, une longueur totale d supérieure à quarante fois, voire quatre-vingts fois sa largeur c.

A titre d'exemple, la longueur totale d de la première paroi peut être comprise entre 50 et 200 microns. Sa largeur c peut être comprise entre 0,5 et 5 microns.

Par ailleurs, selon la direction Z, la première paroi 91 ; 391 s'étend là aussi sur une épaisseur t_{MEMS} supérieure à quatre fois sa largeur c voire supérieure à dix fois sa largeur c. Cette épaisseur peut, là encore, être comprise entre 5 et 100 microns, par exemple.

Quel que soit le mode réalisation considéré, les première et deuxième parois sont délimitées par un bord inférieur (du côté du support), et, à l'opposé, par un bord supérieur, qui sont tous deux des bords libres (c'est-à-dire libres de se déplacer, car n'étant pas liés, en tout cas pas directement, à un autre élément du gyromètre).

Comme indiqué plus haut, dans le premier mode de réalisation (figures 13 et 14), les première et deuxième extrémités 92 et 93 de la première paroi 91 se raccordent au levier 7 par l'intermédiaire, respectivement, de la première paroi de raccord 94 et de la deuxième paroi de raccord 95. Ces deux parois de raccord sont parallèles chacune à la deuxième paroi 97. Elles sont plus courtes, par exemple au moins deux ou trois fois plus courtes que la deuxième paroi (i.e. : d'extension f, parallèlement à l'axe Y, au moins deux ou trois fois plus petite que la longueur b de la deuxième paroi). Elles se raccordent chacune à la première paroi perpendiculairement à cette paroi, et, à l'opposé, elles se raccordent chacune rigidement au levier 7. Comme expliqué dans la partie « résumé », ces parois de raccord permettent d'améliorer la linéarité de la relation force de rappel - déplacement selon X, pour la liaison 9. La largeur e et l'épaisseur des parois de raccord sont comparables (par exemple identiques) à la largeur c et l'épaisseur de la première paroi. De la même manière, la première paroi supplémentaire 91s s'étend, parallèlement à X, d'une première extrémité jusqu'à une deuxième extrémité, ces deux extrémités se raccordant au levier 7 par l'intermédiaire, respectivement, d'une première paroi de raccord supplémentaire 94s, et d'une deuxième paroi de raccord supplémentaire 95s. Ces deux parois de raccord 94s, 95s sont parallèles chacune à la deuxième paroi supplémentaire 97s, et sont plus courtes, par exemple au moins deux ou trois fois plus courtes que la deuxième paroi supplémentaire.

Le deuxième mode de réalisation de la deuxième liaison (figure 15) est identique au premier mode de réalisation, si ce n'est que la première extrémité 92 de la première paroi 91 se raccorde directement et rigidement au levier 7, au lieu de s'y raccorder par l'intermédiaire d'une paroi de raccord.

Le troisième mode de réalisation de la deuxième liaison (figure 16) est identique au premier mode de réalisation, si ce n'est que les première et deuxième extrémités 92, 93 de la première paroi 91 se raccordent chacune directement et rigidement au levier, au lieu de s'y raccorder par l'intermédiaire d'une paroi de raccord.

Un exemple numérique complet est présenté maintenant, à titre d'illustration, pour le premier mode de réalisation de la liaison 9 (figures 13 et 14). Les dimensions des différents éléments de la liaison 9 sont repérées sur la figure 14. Les valeurs de ces dimensions sont données dans le tableau 1, en microns.

Un exemple numérique correspond à la liaison de l'art antérieur, de la figure 2, est présenté aussi à titre de comparaison. Les dimensions des différents éléments de cette liaison sont repérées sur la figure 2. Les valeurs de ces dimensions sont données aussi dans le tableau 1, en microns.

Les valeurs de coefficients de raideur k_{X}, k_{Z} et C_{Y} correspondant à ces dimensionnements, sont données dans le tableau 2, aussi bien pour la présente liaison, 9, que pour celle de l'art antérieur, 9aa. Les valeurs de ces coefficients de raideur ont été obtenues par simulation numérique.

Le coefficient de raideur k_{X} est le coefficient de raideur de la liaison (exprimé par exemple en Newtons par mètre) vis-à-vis d'un déplacement relatif, entre la masse et le levier, selon l'axe X. Le coefficient de raideur kz est le coefficient de raideur de la liaison vis-à-vis d'un déplacement relatif, entre la masse et le levier, selon l'axe Z. Et le coefficient de raideur C_{Y} est le coefficient de raideur en rotation de la liaison (exprimé par exemple en Newtons.mètres par radian), vis-à-vis d'une rotation de la masse par rapport au levier autour de l'axe Δ₂.

Dans le tableau 2, la valeur d'un coefficient de non-linéarité NL est également indiquée. Ce coefficient est égal à l'écart relatif (en %) entre : d'une part, la force de rappel (dirigée selon l'axe X) correspondant à un étirement de 5 microns dans la direction X, et, d'autre part, la valeur k_{X} × 5 microns (i.e. : écart entre la force de rappel, et la droite qui, pour les faibles étirements, décrit le mieux la relation force - étirement selon l'axe X, et cela pour un étirement de la liaison de 5 microns).

**[Tab. 1]**

| Tableau 1 | | | | | | | | | | | |
|---|---|---|---|---|---|---|---|---|---|---|---|
| | a | b | c | d | e | f | g | l | m | n | t_{MEMS} |
| Art antérieur (liaison 9aa) | 4,8 | 176 | 12 | 12 | 13 | 17.8 | 400 | 100 | 2 | | 20 |
| liaison 9 | 1 | 55 | 1 | 82 | 1 | 11 | 20 | 10 | 10 | 100 | 20 |

**[Tab. 2]**

| Tableau 2 | | | |
|---|---|---|---|
| raideur | Art antérieur (liaison 9aa) | liaison 9 (paramètres du tableau 1) | ratio |
| k_{X} (N/m) | 52 | 13 | 4 fois plus petit |
| k_{Z} (N/m) | 780 | 1211 | 1,5 fois plus grand |
| C_{Y} (Nm/rad) | 5,2E-7 | 1,06E-8 | 58 fois plus petit |
| NL (%F(@5µm)) | 0,15% | 17% | 113 fois plus grand |
| k_{X} × NL (N/m) | 0,08 | 2,2 | 28 fois plus grand |

Comme on peut le voir pour cet exemple, la liaison 9 permet effectivement d'obtenir un coefficient de raideur k_{X} faible, un coefficient de raideur k_{Z} élevé, et un coefficient de raideur C_{Y} faible. En particulier, la valeur du coefficient de raideur C_{Y} est nettement plus faible que pour la liaison de l'art antérieur 9aa, ce qui permet d'augmenter substantiellement la sensibilité du gyromètre.

En termes de non-linéarité, les performances de la liaison 9 sont en revanche moins bonnes que pour la liaison de l'art antérieur 9aa. Ces performances restent néanmoins nettement supérieures à ce qui serait obtenu avec une unique paroi flexible (parallèle au plan Y,Z) encastrée à ses deux extrémités. De plus, pour la liaison 9, la valeur assez élevée du coefficient NL n'a finalement pas une incidence aussi importante que ce qu'il y parait à première vue, car le coefficient k_{X} est plus faible que dans l'art antérieur. En effet, pour la dynamique d'oscillation de l'ensemble masse 4 - cadre 3, il faut tenir compte de la raideur totale en X, due non seulement à la liaison 9 (ou 9aa), mais aussi, et surtout, due aux ressorts 10 qui lient le cadre au support. C'est donc plutôt par rapport à cette raideur totale qu'il faudrait évaluer la non-linéarité introduite par la liaison 9 (ou 9aa). Et comme le coefficient k_{X} est faible, pour la liaison 9 (plus fable que pour la liaison 9aa), le terme non-linéaire k_{X} × NL(%), à comparer à la raideur totale selon X, n'est pas aussi élevé que le laisse penser la valeur de NL(%).

Pour le dimensionnement de la liaison 9 correspondant aux valeurs du tableau 1, la non-linéarité de la force de rappel selon l'axe X reste néanmoins relativement élevée. Cette non-linéarité peut être diminuée en augmentant la longueur des parois 91, 97 de la liaison 9, comme on peut le voir dans le tableau 3, qui regroupe des valeurs des coefficients k_{X}, k_{Z}, C_{Y} et NL pour trois dimensionnements différents de la liaison (configurations n° 1 à 3). Dans le tableau 3, les valeurs des dimensions a à f sont données, là encore, en microns. Les valeurs des autres dimensions sont les mêmes que pour le tableau 1.

Les configurations 2 et 3 diffèrent principalement l'une de l'autre de par la longueur f des parois de raccord 94 et 95 (15 microns pour la configuration 2 et 30 microns pour la configuration 3). Cette différence permet de passer de 8% à 5% pour le coefficient NL, ce qui montre bien que la flexibilité des parois de raccord 94, 95 contribue effectivement à réduire la non-linéarité de la liaison, déjà rendue acceptable (par rapport à une unique paroi flexible telle que la deuxième paroi) grâce à l'ajout de la première paroi 91. On remarque aussi que, pour l'exemple correspondant à la configuration 3, le terme k_{X} × NL(%) est seulement 2 à 3 fois plus grand que pour la liaison 9aa de l'art antérieur, tandis que le coefficient de raideur en rotation C_{Y} est environ 60 fois plus faible que pour la liaison 9aa.

**[Tab. 3]**

| Tableau 3 | | | | | | | | | |
|---|---|---|---|---|---|---|---|---|---|
| Config. n° | b | d | f | a, c, e | k_{X} (N/m) | k_{Z} (N/m) | C_{Y} (Nm/rd) | NL (%F(@5µm)) | k_{X} × NL (N/m) |
| 1 | 55 | 82 | 11 | 1 | 13 | 1211 | 1.06E-8 | 17% | 2,2 |
| 2 | 70 | 120 | 15 | 1 | 6 | 557 | 0.81E-8 | 8% | 0,5 |
| 3 | 80 | 120 | 30 | 1 | 4 | 398 | 0.70E-8 | 5% | 0,2 |

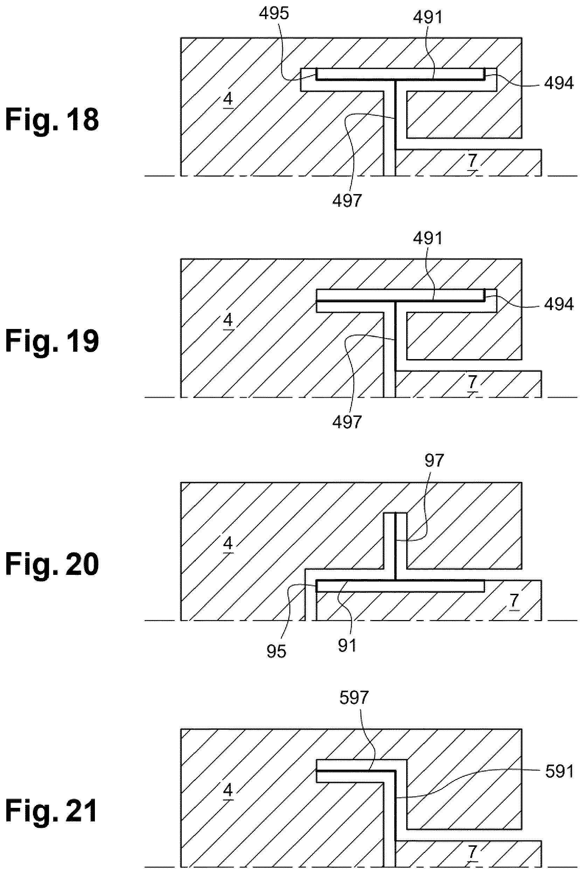

Différentes variantes peuvent être apportées au gyromètre qui vient d'être décrit, en particulier en ce qui concerne la deuxième liaison reliant le levier à la masse d'épreuve. Ainsi, dans les exemples présentés plus haut, pour les modes de réalisation 1 à 3, la première paroi se raccorde au levier tandis que la deuxième paroi (barre centrale du « T », apportant la souplesse selon X) se raccorde à la masse d'épreuve. Mais comme déjà indiqué, en variante, la première paroi pourrait se raccorder à la masse d'épreuve tandis que la deuxième paroi se raccorderait au levier (au lieu de l'inverse). Ainsi, comme illustré en figure 18, on a ici une première paroi 491 qui se raccorde à la masse d'épreuve 4 (ici par l'intermédiaire de deux parois de raccord 495 et 494) tandis que la deuxième paroi 497 se raccorde directement au levier 7, la première et la deuxième paroi se raccordant par ailleurs l'une à l'autre à angle droit, par exemple en formant un T. La figure 19 illustre une variante de la figure 18 dans laquelle, la première paroi est raccordée directement à la masse d'épreuve 4 à l'une de ses extrémités et par l'intermédiaire d'une paroi de raccord 494 à l'autre extrémité.

La figure 20 illustre une variante de la figure 14 dans laquelle la première paroi 91 se raccorde par l'intermédiaire d'une paroi de raccord 95 à l'une de ses extrémité au levier 7 et directement à l'autre extrémité, tandis que la deuxième paroi 97 se raccorde directement à la masse d'épreuve 4, les première et deuxième parois se raccordant par ailleurs l'une à l'autre, à angle droit.

La figure 21 illustre une variante de la figure 17 dans laquelle la première paroi 591 se raccorde directement au levier 7 tandis que la deuxième paroi 597 se raccorde directement à la masse d'épreuve 4, les première et deuxième parois se raccordant par ailleurs l'une à l'autre, à angle droit et formant un L inversé.

## Revendications

1. Dispositif (1) micro-électromécanique comprenant :
- un cadre (3),
- une masse (4) d'épreuve, reliée au cadre par une première liaison mécanique (5) qui autorise un pivotement de la masse d'épreuve par rapport au cadre autour d'un premier axe (Δ₁) de rotation parallèle à un plan moyen (P) du cadre, et
- un levier (7) de détection d'un pivotement de la masse, relié à la masse (4) d'épreuve par une deuxième liaison (9 ; 19 ; 29 ; 39) mécanique autorisant une rotation du levier (7) par rapport à la masse (4) d'épreuve autour d'un deuxième axe (Δ₂), parallèle au premier axe (Δ₁),
- **caractérisé en ce que** la deuxième liaison (9 ; 19 ; 29 ; 39) comprend :
∘ une première paroi (91 ; 391), perpendiculaire ou quasiment perpendiculaire au deuxième axe de rotation (Δ₂), et
∘ une deuxième paroi (97), perpendiculaire au plan moyen (P) du cadre et parallèle ou quasiment parallèle au deuxième axe de rotation (Δ₂),
∘ la première paroi (91 ; 391) et la deuxième paroi (97) se raccordant perpendiculairement ou quasiment perpendiculairement l'une à l'autre et se raccordant, pour l'une (91 ; 391), au levier (7), et pour l'autre (97) à la masse (4) d'épreuve.
dans lequel le cadre (3) et la masse (4) d'épreuve sont appelés respectivement premier cadre (3) et première masse d'épreuve (4), le dispositif (1) comprenant en outre :
- un deuxième cadre (3'),
- une deuxième masse (4') d'épreuve, reliée au deuxième cadre (3') par une première liaison supplémentaire (5') qui autorise un pivotement de la deuxième masse (5') d'épreuve par rapport au deuxième cadre autour d'un premier axe de rotation supplémentaire (Δ'₁), parallèle au premier axe de rotation (Δ₁), et dans lequel
- la deuxième masse (4') d'épreuve est reliée elle aussi au levier (7) de détection, par une deuxième liaison supplémentaire (9') autorisant une rotation du levier (7) par rapport à la deuxième masse (4') d'épreuve autour d'un deuxième axe de rotation supplémentaire (Δ'₂), parallèle au premier axe de rotation (Δ'₁),
- le levier (7) étant relié d'un côté la première masse (4) d'épreuve, et de l'autre à la deuxième masse (4') d'épreuve.

2. Dispositif (1) selon la revendication 1 dans lequel, la première paroi (91) et la deuxième paroi (97) se raccordent l'une à l'autre en formant un T, la deuxième paroi (97) correspondant à la barre médiane verticale du T.

3. Dispositif (1) selon la revendication 1 ou 2, dans lequel :
- la première paroi (91) s'étend :
∘ d'une première extrémité (92), raccordée au levier (7),
∘ jusqu'à une deuxième extrémité (93), raccordée elle aussi au levier (7), et dans lequel
- la deuxième paroi (97) s'étend :
∘ d'une première extrémité (98), par laquelle la deuxième paroi (97) se raccorde à la première paroi (91), dans une zone médiane de la première paroi, entre la première extrémité (92) et la deuxième extrémité (93) de la première paroi,
∘ jusqu'à une deuxième extrémité (99) par laquelle la deuxième paroi (97) se raccorde à la masse (4) d'épreuve.

4. Dispositif (1) selon la revendication 3, dans lequel la première extrémité (92) de la première paroi (91) se raccorde au levier (7) par l'intermédiaire d'une paroi de raccord (94), qui s'étend de cette première extrémité (92) jusqu'au levier, parallèlement ou quasiment parallèlement à la deuxième paroi (97).

5. Dispositif (1) selon la revendication 4, dans lequel la deuxième extrémité (93) de la première paroi (91) se raccorde au levier (7) par l'intermédiaire d'une autre paroi de raccord (95) qui s'étend de cette deuxième extrémité (93) jusqu'au levier, parallèlement ou quasiment parallèlement à la deuxième paroi (97).

6. Dispositif (1) selon l'une des revendications précédentes, dans lequel la première paroi (91 ; 391) se raccorde au levier (7) tandis que la deuxième paroi (97) se raccorde à la masse (4) d'épreuve, et dans lequel la première paroi (91 ; 391) est reliée à la masse (4) d'épreuve seulement par ladite deuxième paroi (97).

7. Dispositif (1) selon l'une des revendications précédentes, dans lequel la deuxième liaison (9 ; 19 ; 29 ; 39) comprend en outre :
o une première paroi supplémentaire, perpendiculaire ou quasiment perpendiculaire au deuxième axe de rotation (Δ₂), et
o une deuxième paroi supplémentaire (97s), parallèle ou quasiment parallèle au deuxième axe de rotation (Δ₂),
o la première paroi supplémentaire (91s) et la deuxième paroi supplémentaire (97s) se raccordant perpendiculairement ou quasiment perpendiculairement l'une à l'autre et se raccordant, pour l'une, au levier (7), et pour l'autre à la masse (4) d'épreuve,
o la deuxième paroi (97) et la deuxième paroi supplémentaire (97s) étant situées dans le prolongement l'une de l'autre.

8. Dispositif (1) selon l'une des revendications précédentes, dans lequel la première paroi (91 ; 391) a, selon une direction (X) parallèle au levier (7), une longueur (d) supérieure à vingt fois une largeur (c) présentée par la première paroi selon une direction (Y) perpendiculaire au levier, voire supérieure à quarante fois la largeur (c) de la première paroi.

9. Dispositif (1) selon l'une des revendications précédentes, dans lequel la deuxième paroi (97) a, parallèlement au deuxième axe de rotation (Δ₂), une longueur (b) supérieure à vingt fois une largeur (a) présentée par la deuxième paroi selon une direction (X) perpendiculaire au deuxième axe de rotation, voire supérieure à quarante fois la largeur (a) de la deuxième paroi.

10. Dispositif (1) selon l'une des revendications précédentes, comprenant en outre un support (2) et dans lequel le premier cadre (3) et le deuxième cadre (3') sont tous deux guidés en translation par rapport au support (2) selon un axe (X) de déplacement qui est parallèle à un plan moyen (P) du premier cadre (3) et qui est perpendiculaire au premier axe de rotation (Δ'₁).

11. Dispositif (1) selon la revendication précédente, comprenant en outre un système d'actionnement électromécanique configuré pour imposer à chacun des cadres (3, 3') une oscillation selon ledit axe de déplacement (X), le déplacement du premier cadre (3) par rapport au support (2), et le déplacement du deuxième cadre (3') par rapport au support (2) ayant une même amplitude et des sens opposés l'un à l'autre.

## Patentansprüche

1. Mikroelektromechanische Vorrichtung (1) mit:
- einem Rahmen (3),
- einer Prüfmasse (4), die mit dem Rahmen durch eine erste mechanische Verbindung (5) verbunden ist, die ein Schwenken der Prüfmasse in Bezug auf den Rahmen um eine erste Drehachse (Δ₁) parallel zu einer Mittelebene (P) des Rahmens zulässt, und
- einem Hebel (7) zum Erfassen eines Schwenkens der Masse, der mit der Prüfmasse (4) über eine zweite mechanische Verbindung (9; 19; 29; 39) verbunden ist, die eine Drehung des Hebels (7) in Bezug auf die Prüfmasse (4) um eine zweite Achse (Δ₂), die parallel zur ersten Achse (Δ₁) ist, zulässt,
- **dadurch gekennzeichnet, dass** die zweite Verbindung (9; 19; 29; 39) umfasst :
o eine erste Wand (91; 391), die senkrecht oder nahezu senkrecht zur zweiten Drehachse (Δ₂) verläuft, und
o eine zweite Wand (97), die senkrecht zur Mittelebene (P) des Rahmens und parallel oder nahezu parallel zur zweiten Drehachse (Δ₂) verläuft,
o wobei die erste Wand (91; 391) und die zweite Wand (97) senkrecht oder nahezu senkrecht zueinander verbunden sind und die eine (91; 391) mit dem Hebel (7) und die andere (97) mit der Prüfmasse (4) verbunden sind.
wobei der Rahmen (3) und die Prüfmasse (4) als erster Rahmen (3) bzw. erste Prüfmasse (4) bezeichnet werden und die Vorrichtung (1) ferner umfasst:
- einen zweiten Rahmen (3'),
- eine zweite Prüfmasse (4'), die mit dem zweiten Rahmen (3') durch eine erste zusätzliche Verbindung (5') verbunden ist, die ein Schwenken der zweiten Prüfmasse (5') in Bezug auf den zweiten Rahmen um eine erste zusätzliche Drehachse (Δ'₁) parallel zur ersten Drehachse (Δ₁) zulässt, und bei der
- die zweite Prüfmasse (4') ebenfalls mit dem Detektionshebel (7) verbunden ist, und zwar durch eine zweite zusätzliche Verbindung (9'), die eine Drehung des Hebels (7) in Bezug auf die zweite Prüfmasse (4') um eine zweite zusätzliche Drehachse (Δ'₂), die parallel zur ersten Drehachse (Δ'₁) verläuft, zulässt,
- wobei der Hebel (7) auf der einen Seite mit der ersten Prüfmasse (4) und auf der anderen Seite mit der zweiten Prüfmasse (4') verbunden ist.

2. Vorrichtung (1) nach Anspruch 1, bei der die erste Wand (91) und die zweite Wand (97) miteinander verbunden sind und ein T bilden, wobei die zweite Wand (97) dem vertikalen Schaft des T entspricht.

3. Vorrichtung (1) nach Anspruch 1 oder 2, bei der:
- die erste Wand (91) sich wie folgt erstreckt:
o von einem ersten Ende (92), das mit dem Hebel (7) verbunden ist,
o bis zu einem zweiten Ende (93), das ebenfalls mit dem Hebel (7) verbunden ist, und bei der
- die zweite Wand (97) sich wie folgt erstreckt:
o von einem ersten Ende (98), durch das die zweite Wand (97) mit der ersten Wand (91) verbunden ist, in einem mittleren Bereich der ersten Wand zwischen dem ersten Ende (92) und dem zweiten Ende (93) der ersten Wand,
o bis zu einem zweiten Ende (99), über das die zweite Wand (97) mit der Prüfmasse (4) verbunden ist.

4. Vorrichtung (1) nach Anspruch 3, bei der das erste Ende (92) der ersten Wand (91) mit dem Hebel (7) über eine Verbindungswand (94) verbunden ist, die sich von diesem ersten Ende (92) bis zum Hebel parallel oder nahezu parallel zur zweiten Wand (97) erstreckt.

5. Vorrichtung (1) nach Anspruch 4, bei der das zweite Ende (93) der ersten Wand (91) mit dem Hebel (7) über eine weitere Verbindungswand (95) verbunden ist, die sich von diesem zweiten Ende (93) bis zum Hebel erstreckt, parallel oder nahezu parallel zur zweiten Wand (97).

6. Vorrichtung (1) nach einem der vorhergehenden Ansprüche, bei der die erste Wand (91; 391) mit dem Hebel (7) verbunden ist, während die zweite Wand (97) mit der Prüfmasse (4) verbunden ist, und bei der die erste Wand (91; 391) mit der Prüfmasse (4) nur durch die zweite Wand (97) verbunden ist.

7. Vorrichtung (1) nach einem der vorhergehenden Ansprüche, bei der die zweite Verbindung (9; 19; 29; 39) außerdem umfasst:
o eine erste zusätzliche Wand, die senkrecht oder nahezu senkrecht zur zweiten Drehachse (Δ₂) verläuft, und
o eine zweite zusätzliche Wand (97s), die parallel oder nahezu parallel zur zweiten Drehachse (Δ₂) verläuft,
o wobei die erste zusätzliche Wand (91s) und die zweite zusätzliche Wand (97s) senkrecht oder nahezu senkrecht zueinander verbunden sind und die eine mit dem Hebel (7) und die andere mit der Prüfmasse (4) verbunden ist,
o wobei die zweite Wand (97) und die zusätzliche zweite Wand (97s) in Verlängerung zueinander angeordnet sind.

8. Vorrichtung (1) nach einem der vorhergehenden Ansprüche, bei der die erste Wand (91; 391) in einer Richtung (X) parallel zum Hebel (7) eine Länge (d) aufweist, die größer ist als das Zwanzigfache einer Breite (c), die von der ersten Wand in einer Richtung (Y) senkrecht zum Hebel gebildet wird, oder sogar größer ist als das Vierzigfache der Breite (c) der ersten Wand.

9. Vorrichtung (1) nach einem der vorhergehenden Ansprüche, bei der die zweite Wand (97) parallel zur zweiten Drehachse (Δ) eine Länge (b) hat, die größer ist als das Zwanzigfache einer Breite (a), die die zweite Wand in einer Richtung (X) senkrecht zur zweiten Drehachse aufweist, oder sogar größer ist als das Vierzigfache der Breite (a) der zweiten Wand.

10. Vorrichtung (1) nach einem der vorhergehenden Ansprüche, die außerdem einen Träger (2) umfasst und bei der sowohl der erste Rahmen (3) als auch der zweite Rahmen (3') in Bezug auf den Träger (2) entlang einer Bewegungsachse (X) translatorisch geführt sind, die parallel zu einer Mittelebene (P) des ersten Rahmens (3) und senkrecht zur ersten Drehachse (Δ'₁) verläuft.

11. Vorrichtung (1) nach dem vorhergehenden Anspruch, die außerdem ein elektromechanisches Betätigungssystem umfasst, das so gestaltet ist, dass es jedem der Rahmen (3, 3') eine Schwingung entlang der Bewegungsachse (X) auferlegt, wobei die Bewegung des ersten Rahmens (3) in Bezug auf den Träger (2) und die Bewegung des zweiten Rahmens (3') in Bezug auf den Träger (2) die gleiche Amplitude und zueinander entgegengesetzte Richtungen haben.

## Claims

1. A microelectromechanical device (1) comprising:
- a frame (3),
- a proof mass (4), connected to the frame through a first mechanical link (5) which allows pivoting of the proof mass to relative to the frame about a first axis (Δ₁) of rotation parallel to a mean plane (P) of the frame, and
- a lever (7) for detecting pivoting of the mass, connected to the proof mass (4) through a second mechanical link (9; 19; 29; 39) allowing rotation of the lever (7) relative to the proof mass (4) about a second axis (Δ₂) parallel to the first axis (Δ₁),
- **characterised in that** the second link (9; 19; 29; 39) comprises:
o a first wall (91; 391), perpendicular or virtually perpendicular to the second axis of rotation (Δ₂), and
∘ a second wall (97), perpendicular to the mean plane (P) of the frame and in parallel or virtually in parallel to the second axis of rotation (Δ₂),
o the first wall (91; 391) and the second wall (97) connecting to each other perpendicularly or virtually perpendicularly and connecting, as regards one (91; 391), to the lever (7) and, as regards the other (97), the proof mass (4),
wherein the frame (3) and the proof mass (4) are called first frame (3) and first proof mass (4) respectively, the device (1) further comprising:
- a second frame (3'),
- a second proof mass (4'), connected to the second frame (3') through a first additional link (5') which allows pivoting of the second proof mass (5') relative to the second frame about a first additional axis of rotation (Δ'₁), parallel to the first axis of rotation (Δ₁), and wherein
- the second proof mass (4') is also connected to the detection lever (7) through a second additional link (9') allowing rotation of the lever (7) relative to the second proof mass (4') about a second additional axis of rotation (Δ'₂) parallel to the first axis of rotation (Δ'₁),
- the lever (7) being connected on one side to the first proof mass (4) and on the other side to the second proof mass (4').

2. The device (1) according to claim 1, wherein the first wall (91) and the second wall (97) are connected to each other to form a T, the second wall (97) corresponding to the vertical median bar of the T.

3. The device (1) according to claim 1 or 2, wherein:
- the first wall (91) extends:
∘ from a first end (92), connected to the lever (7),
∘ to a second end (93), also connected to the lever (7), and wherein
- the second wall (97) extends:
o from a first end (98), through which the second wall (97) connects to the first wall (91), in a median zone of the first wall, between the first end (92) and the second end (93) of the first wall,
∘ to a second end (99) through which the second wall (97) connects to the proof mass (4).

4. The device (1) according to claim 3, wherein the first end (92) of the first wall (91) connects to the lever (7) via a connecting wall (94), which extends from this first end (92) to the lever, in parallel or virtually in parallel to the second wall (97).

5. The device (1) according to claim 4, wherein the second end (93) of the first wall (91) is connected to the lever (7) by means of another connecting wall (95) which extends from this second end (93) to the lever, in parallel or virtually in parallel to the second wall (97).

6. The device (1) according to one of the preceding claims, wherein the first wall (91; 391) connects to the lever (7) while the second wall (97) connects to the proof mass (4), and wherein the first wall (91; 391) is connected to the proof mass (4) only through said second wall (97).

7. The device (1) according to one of the preceding claims, wherein the second link (9; 19; 29; 39) further comprises:
o a first additional wall, perpendicular or virtually perpendicular to the second axis of rotation (Δ₂), and
o a second additional wall (97s), in parallel or virtually in parallel to the second axis of rotation (Δ₂),
o the first additional wall (91s) and the second additional wall (97s) connecting perpendicularly or virtually perpendicularly to each other and connecting, as regards one, to the lever (7) and, as regards the other, to the proof mass (4),
∘ the second wall (97) and the second additional wall (97s) being located as an extension of each other.

8. The device (1) according to one of the preceding claims, wherein the first wall (91; 391) has, along a direction (X) parallel to the lever (7), a length (d) greater than twenty times a width (c) that the first wall has along a direction (Y) perpendicular to the lever, or even greater than forty times the width (c) of the first wall.

9. The device (1) according to one of the preceding claims, wherein the second wall (97) has, in parallel to the second axis of rotation (Δ₂), a length (b) greater than twenty times a width (a) that the second wall has in a direction (X) perpendicular to the second axis of rotation, or even greater than forty times the width (a) of the second wall.

10. The device (1) according to one of the preceding claims, further comprising a support (2) and wherein the first frame (3) and the second frame (3') are both translationally guided relative to the support (2) along an axis (X) of displacement which is parallel to a mean plane (P) of the first frame (3) and which is perpendicular to the first axis of rotation (Δ'₁).

11. The device (1) according to the preceding claim, further comprising an electromechanical actuation system configured to impose oscillation to each of the frames (3, 3') along said axis of displacement (X), the displacement of the first frame (3) relative to the support (2) and the displacement of the second frame (3') relative to the support (2) having a same amplitude and directions opposite to each other.
